# EUROPEAN PATENT APPLICATION

(11) **EP 1 477 936 A2**
(43) Date of publication of application: **17.11.2004**
(21) Application number: 04252753.1
(22) Date of filing: 12.05.2004
(51) Int. Cl.: G07B 15/00

(54) **Vehicle-installed terminal apparatus, communication payment method and payment management system thereof**

(30) Priority: 12.05.2003 JP 2003132661; 06.06.2003 JP 2003162690
(71) Applicant: Omron Corporation, Kyoto-shi, Kyoto 600-8530 (JP)
(72) Inventor: Kanayama, Kenji, 801, Minamifudodo-cho, Kyoto-shi Kyoto 600-8530 (JP)
(74) Representative: Calderbank, Thomas Roger

(57) **Abstract**

A mobile telephone (5) for conducting communications using a mobile telephone network is attached to a hand-free unit (4). A processing section (31) recognizes the personal identification number stored in a storage section (33) and the personal identification number voiced by a passenger by a voice recognition section (34), and collates the personal identification number with the personal identification number previously stored in the storage section (33) to perform authentication processing. If the passenger is authenticated, communications with a center system (2) are conducted through the mobile telephone (5), and toll payment processing is performed with the center system (2).

## Description

This invention relates to a toll payment system making use of a communication terminal such as a mobile telephone in a telematic field.

In recent years, ETC (electronic toll collection) or an automatic toll collection system has been in practical use, and toll collection of toll roads, parking lots, etc., has been being developed to be an automation process. In Japan, to make the ETC practical, two-way communication, 5.8-GHz hand DSRC (Dedicated Short Range Communication) active system is adopted as a system for transferring information between a dedicated vehicle-installed terminal and a roadside machine. This system is also called transceiver system, wherein the dedicated vehicle-installed terminal also contains an oscillator and the dedicated vehicle-installed terminal and the roadside machine emit radio waves to each other on an equality with each other. Therefore, it is possible not only to transfer information at high speed and in large quantity, but also to ensure high reliability as compared with a passive systemwherein a vehicle-installed terminal does not contain an oscillator.

Introduction of a system called road pricing for charging a car entering a specific region is also examined for the purpose of alleviating traffic congestion in cities, for example. In the road pricing system, it is also assumed that charging with the ETC, etc., is conducted at all points of gateways of a specific region.

In the road pricing system, a systembasedon toll collection with ETC vehicle-installed machines is provided with means for acquiring number plate information from vehicles with no vehicle-installed machine and extracts payment-relevant information of the account number, etc., from the number plate information such as disclosed in JP-A-2002-208045.

On the other hand, a toll payment system with a portable terminal such as a mobile telephone is also proposed as anew mode of toll payment. In recent years, mobile telephones have become explosively popular among the market, which shows an infrastructural phenomenon of an industrial economical aspect. Therefore, if the toll payment system with a mobile telephone is established, it can be expected that a large number of persons will use the system. For example, JP-A-2001-76220 discloses a payment system in a vending machine using a mobile telephone.

The current ETC system requires the dedicated vehicle-installed terminal being installed in a car as described above. Therefore, the user needs to bear the expense for installing a dedicated vehicle-installed terminal, which takes more time for such a dedicated vehicle-installed terminal to be widespread used under the present circumstances.

On toll roads such as expressways, a vehicle without installing a dedicated vehicle-installed terminalcan be charged at a conventional gate; however, in the above-mentioned road pricing system, simultaneous use of a conventional gate is not realistic way any longer. Therefore, the road pricing system leaves a large problem of the vehicle that is not installing a dedicated vehicle-installed terminal.

Further, a similar problem arose in automating toll collection not only in the road pricing, but also in various charging and payment systems of parking lots, drive through, ferries, information content distribution, and so on. In case of a large number of vehicles without the dedicated vehicle-installed terminals being installed, most of the merits from the infrastructure of the system might be spoiled.

As for the system for extracting payment-relevant information of the account number or other related information from the number plate information, dealing with a large percentage of the vehicles without dedicated vehicle-installed terminals may bring about increase of the processing amount which cannot be avoided under the present circumstance such that obtaining payment-relevant information of the account number is not practically linked with the number plate information. Although the number plate information is linked with the owner of the vehicle, a system that can charge the driver of the vehicle rather than the owner thereof is more preferable from the viewpoint of dealing with rent-a-car and so on.

Although it is possible to make a payment on toll roads or in road pricing by using the mobile telephones, which are widespread used among the market, the following problems shall be considered before realizing it. That is, first, it is assumed that a payment might be made during driving an automobile, but operating a button of one' s mobile telephone during driving his car is not recommended from the safety driving point of views, and more over, such a driving activity might be also prohibited according to the Road Traffic rules. The pending problems, which might be also concerned, might be the cases of the mobile phone being lost, thieved, misplaced, and so on.

It is therefore an object of the invention to provide a vehicle-installed terminal, a vehicle-installed terminal controlprogram, a record medium recording the vehicle-installed terminal control program, a communication payment method of the vehicle-installed terminal, a payment management system, a payment management program, a record medium recording the payment management program, a payment management method, a toll collection system, a toll collection program, a record medium recording the toll collection program, and a toll collection method in a communication payment system excellent in security and convenience used when the user riding in an automobile makes a toll payment.

According to the invention, it is provided with a vehicle-installed terminal being installed in an automobile, including communication terminal control means for performing communication control of a communication terminal for conducting communications using a mobile telephone network; and control means for controlling the operation of the vehicle-installed terminal, characterized in that the control means includes authentication processing means for authenticating the user; and payment communication processing means for causing the communication terminal control means to cause the communication terminal to conduct communications with an external payment management system and performing payment processing with the payment management system if the authentication processing means authenticates the user.

According to the invention, it is provided with a communication payment method of a vehicle-installed terminal installed in an automobile, including the steps of authenticating the user; and causing a communication terminal for conducting communications using a mobile telephone network to conduct communications with an external payment management system and performing payment processing with the payment management system if the user is authenticated.

According to the configuration and the method, it is made possible to perform various types of payment processing while the user rides in an automobile using a communication terminal for conducting communications using a mobile telephone network, for example, a mobile telephone rapidly coming into widespread use. Therefore, it is made possible to make a payment with a more inexpensive vehicle-installed terminal for providing a communication function as a communication terminal without using an ETC-dedicated vehicle-installed terminal having a communication terminal as in the ETC, for example.

In the configuration, payment processing cannot be performed unless the authentication processing means authenticates the user. Therefore, payment processing cannot be performed with any other person than the user whose identification is authenticated and thus, for example, if a vehicle is stolen, payment processing cannot be performed with a third person and security can be provided.

Authentication processing is performed in the vehicle-installed terminal. Thus, it is unnecessary to conduct communications with an external system for authentication, for example, so that the authentication processing can be performed rapidly and the communication cost for authentication can also be saved.

In the ETC, a radio system for conducting communications with a dedicated vehicle-installed terminal needs to be provided at a gate. However, in the above-described configuration, communications for making a payment use the mobile telephone network, so that the need for providing a radio system as in the ETC can be eliminated.

The vehicle-installed terminal according to the invention may further include storage means used by the control means in the above-described configuration, wherein the authentication processing means may perform authentication processing by collating the personal identification number previously stored in the storage means with the personal identification number entered by the user.

According to the configuration, the personal identification number is previously stored in the storage means and authentication processing is performed as the user enters the personalidentification number. Therefore, a comparatively simple configuration can be adopted as the configuration for the authentication processing, so that the system cost can be decreased.

The vehicle-installed terminal according to the invention may further include voice input means for inputting voice of the user and voice recognition means for conducting voice recognition based on a voice signal input by the voice input means in the above-described configuration, wherein the personal identification number may be entered by voice of the user.

According to the configuration, it is made possible for the user to enter the personal identification number by voice. Thus, for example, if the user is driving an automobile, it is made possible to perform payment processing without any trouble in the driving.

Such a hand-free unit is an indispensable unit for the user who wants to hold a conversation through a mobile telephone during driving an automobile and therefore the user is to easily purchase such a vehicle-installed terminal. Thus, it can be expected that such a payment system will become widespread comparatively smoothly.

The vehicle-installed terminal according to the invention may further include storage means used by the control means in the above-described configuration, wherein the storage means may store proper information for enabling the individual of the communication terminal to be determined as the user database, and wherein the authentication processing means may perform authentication processing by collating the proper information stored in the user database in the storage means with proper information extracted from the communication terminal.

In the above-described configuration, first the proper information for enabling the communication terminal to be determined is stored in the storage means as the user database. When the proper information is read from the communication terminal, the authentication processing means authenticates the user by collating the proper information stored in the user database with the read proper information.

To use a mobile telephone as the communication terminal, for example, nowadays the use mode in which each person has his or her own mobile telephone for use becomes widespread. Therefore, if the individual difference of the mobile telephone can be detected, the user of the mobile telephone can be determined.

That is, the user can be authenticated simply by connecting the communication terminal to the vehicle-installed terminal. Therefore, it is made possible to drastically decrease the labor of the user.

As the proper information, for example, it is possible to use information for enabling the mobile terminal to be determined, extracted from the IC installed in the mobile terminal. Such information basically is built in the IC and thus is extremely hard to tamper. Therefore, the security of the authentication processing can be enhanced.

In the vehicle-installed terminal according to the invention, the control means may further include vehicle body information communication processing means for transmitting information concerning the automobile to the external payment management system in the above-described configuration.

According to the configuration, the information concerning the automobile, for example, vehicle type information, vehicle body identification information, and the like are sent to the external payment management system, so that it is made possible to perform payment processing and toll calculation processing in more detail and more precisely in the payment management system.

In the vehicle-installed terminal according to the invention, the payment communication processing means may transmit the personal identification number for payment entered by the user to the payment management system in the above-described configuration.

In the configuration, when authentication of the authentication means is complete and communications with the payment management system are established, further the user is requested to enter the personal identification number for payment and the entered personal identification number is transmitted to the payment management system. Therefore, the authentication processing is performed in two steps, so that the security can be furthermore enhanced.

In the vehicle-installed terminal according to the invention, the payment communication processing means may transmit proper information extracted from the communication terminal to the payment management system in the above-described configuration.

In the configuration, when authentication of the authentication means is complete and communications with the payment management system are established, further transmitting of proper information extracted from the communication terminal is requested and the extractedproper information is transmitted to the payment management system. Therefore, the authentication processing is performed in two steps, so that the security can be furthermore enhanced.

The vehicle-installed terminal according to the invention may further include position information acquisition means for acquiring the current position information of the automobile in the above-described configuration, wherein the control means may further include position recognition processing means for causing the payment communication processing means to start payment processing when the current positioninformation becomes a predetermined position.

According to the configuration, the position information acquisition means can acquire the current position information of the automobile and it is made possible to start the payment processing when the current position information becomes a predetermined position. Thus, it is made possible to suitably use the vehicle-installed terminal with a road pricing system for charging when the vehicle enters a specific region. The fact that the vehicle enters the specific region canbe recognized based on the detection result of the position information acquisition means. Thus, for example, a unit for conducting radio communications with the vehicle-installed terminal need not be provided on the road and the vehicle-installed terminal need not be provided with a unit for conducting radio communications with the unit on the road, so that an increase in the cost to introduce the road pricing system canbe suppressed.

According to the invention, there is provided a payment management system for conducting communications with the vehicle-installed terminal according to the invention and performing payment processing for the user of the vehicle-installed terminal, the payment management system including user identification means for identifying the user of the vehicle-installed terminal based on information sent from the vehicle-installed terminal; toll recognition means for recognizing a toll to charge the user based on information sent from the vehicle-installed terminal; andpayment processing means for performing payment processing of the toll recognized by the toll recognition means for the user.

According to the invention, there is provided a payment management method in a payment management system for conducting communications with the vehicle-installed terminal according to the invention and performing payment processing for the user of the vehicle-installed terminal, the payment management method including the steps of identifying the user of the vehicle-installed terminal based on information sent from the vehicle-installed terminal; recognizing a toll to charge the user based on information sent from the vehicle-installed terminal; and performing payment processing of the toll recognized in the step.

According to the configuration and the method, the user is identified and the toll is recognized based on the information sent from the vehicle-installed terminal, and the payment processing is performed based on the result. Therefore, the payment processing can be performed precisely.

In the payment management system according to the invention, in the above-described configuration, the user identification means may recognize the correspondence between information sent from a toll collection system for providing service for the user of the vehicle-installed terminal and collecting the toll of the service and information sent from the vehicle-installed terminal, and the toll recognition means may calculate the toll for the user based on information sent from the toll collection system.

According to the configuration, the correspondence between the information sent from the toll collection system and the information sent from the vehicle-installed terminal is recognized and the toll for the user is calculated based on it. Therefore, it is made possible to perform the payment processing precisely without conducting communications concerning charging between the vehicle-installed terminal and the toll collection system. That is, in the vehicle-installed terminal and the toll collection system, the components for conducting communications therebetween become unnecessary, so that it is made possible to decrease the costs of the vehicle-installed terminal and the toll collection system.

According to the invention, there is provided a toll collection system for providing service for the user of the vehicle-installed terminal according to the invention and collecting the toll of the service, the toll collection system including vehicle body identification means for recognizing vehicle body identification information for identifying the automobile in which the vehicle-installed terminal is installed; and vehicle body identification information transmission means for transmitting the vehicle body identification information to an external payment management system.

According to the invention, there is provided a toll collection method in a toll collection system for providing service for the user of the vehicle-installed terminal according to the invention and collecting the toll of the service, the toll collectionmethod including the steps of recognizing vehicle body identification information for identifying the automobile in which the vehicle-installed terminal is installed; and transmitting the vehicle body identification information to an external payment management system.

According to the configuration and the method, payment made by the user receiving the service is accomplished as the vehicle body identification information for identifying the automobile is recognized and is transmitted to the payment management system, since the vehicle-installed terminal also conducts communications with the payment management system and the payment management system can find the correspondence between the user of the vehicle-installed terminal and the user receiving the service in the toll collection system. Therefore, radio communications, etc., need not be conducted between the toll collection system and the vehicle-installed terminal, so that it is made possible to decrease the costs of the toll collection systemand the vehicle-installed terminal.

In the toll collection system according to the invention, in the above-described configuration, the vehicle body identification means may further perform processing of determining the vehicle type of the automobile, and the vehicle body identification information transmission means may also transmit the vehicle type determination information to the payment management system.

According to the configuration, the vehicle type determination information is also transmitted to the payment management system, so that it is made possible to calculate a toll in the payment management system more meticulously.

The toll collection system according to the invention may further include passage permission means for permitting passage of the automobile upon reception of a message indicating that the user of the automobile to collect the toll completes a payment normally in the above-described configuration.

According to the configuration, the fact that the user of the automobile to collect the toll completes a payment normally is checked based on the message from the payment management system before passage of the automobile is permitted. Thus, the toll can be collected more precisely.

According to the invention, there is provided a toll collection system for providing service for the user of the vehicle-installed terminal according to the invention and collecting the toll of the service, the toll collection system including vehicle body identification means for recognizing vehicle body identification information for identifying the automobile inwhich the vehicle-installed terminal is installed; storage means for storing the vehicle body identification information recognized bythe vehiclebodyidentification means; and payment completion recognition means for erasing the vehicle body identification information stored in the storage means upon reception of the vehicle body identification information concerning the automobile of the user completing a payment normally from payment management system and recognizing that the user corresponding to the vehicle body identification information does not make a payment if the predetermined time has elapsed since the vehicle body identification information was stored in the storage means.

According to the invention, there is provided a toll collection method in a toll collection system for providing service for the user of the vehicle-installed terminal according to the invention and collecting the toll of the service, the toll collection method including the steps of recognizing vehicle body identification information for identifying the automobile in which the vehicle-installed terminal is installed;
storing the vehicle body identification information; and erasing the stored vehicle body identification information upon reception of the vehicle body identification information concerning the automobile of the user completing a payment normally from payment management system and recognizing that the user corresponding to the vehicle body identification information does not make a payment if the predetermined time has elapsed since the vehicle body identification information was stored.

According to the configuration and method, for the automobile to be charged, first the vehicle body identification information of the automobile is stored in the storage means. As the vehicle body identification information concerning the automobile with the normal completion of the payment acknowledged is erased, the vehicle body identification information of the automobile not completing the payment can be extracted. Therefore, it is made possible to identify the automobile completing the payment without conducting radio communications, etc., between the toll collection system and the vehicle-installed terminal.
In the drawings
FIG. 1 is a block diagram to show the schematic configuration of a mobile telephone and a hand-free unit in a communication payment system according to a first embodiment of the invention;
FIG. 2 is a block diagram to show the schematic configurations of the communication payment system according to the first embodiment of the invention;
FIG. 3 is a block diagram to show the schematic configuration for performing payment processing in the hand-free unit;
FIG. 4 is a block diagram to show the schematic configuration of a center system;
FIG. 5 is a schematic drawing to show a toll collection system;
FIG. 6 is a block diagram to show the schematic configuration of the toll collection system;
FIG. 7 is a flowchart to show a processing flow in the mobile telephone and the hand-free unit;
FIG. 8 is a flowchart to show a processing flow in the toll collection system;
FIG. 9 is a flowchart to show a processing flow in the center system;
FIG. 10 is a drawing to show an outline of a road pricing system;
FIG. 11 is a block diagram to show the schematic configurations of a communication payment system applied to the road pricing system;
FIG. 12 is a block diagram to show the schematic configuration of a mobile telephone and a hand-free unit in the communication payment system shown in FIG. 11;
FIG. 13 is a block diagram to show the schematic configuration for performing payment processing in the hand-free unit shown in FIG. 12;
FIG. 14 is a drawing to show an outline of a number plate recognition unit in the communication payment system shown in FIG. 11;
FIG. 15 is a flowchart to show a processing flow in the mobile telephone and the hand-free unit in the communication payment system shown in FIG. 11;
FIG. 16 is a flowchart to show a processing flow in the number plate recognition unit in the communication payment system shown in FIG. 11;
FIG. 17 is a flowchart to show a processing flow in a center system in the communication payment system shown in FIG. 11;
FIG. 18 is a drawing to describe a free-flow section toll collection system;
FIG. 19 is a block diagram to show the schematic configuration for performing payment processing in the hand-free unit shown in a configuration example different from that shown in FIG. 3;
FIG. 20 is a block diagram to show the schematic configuration for performing payment processing in the hand-free unit shown in a configuration example different from that shown in FIG. 13;
FIG. 21 is a flowchart to show a processing flow in the mobile telephone and the hand-free unit in the configuration example shown in FIG. 19; and
FIG. 22 is a flowchart to show a processing flow in the mobile telephone and the hand-free unit in the configuration example shown in FIG. 20.

### (First embodiment)

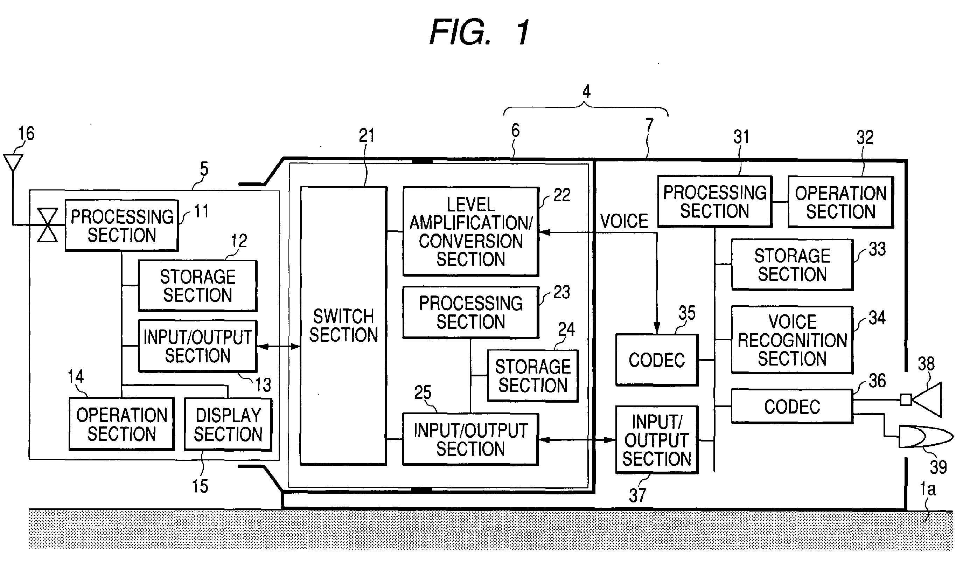

A first embodiment of the invention will be described with reference to FIGS. 1 to 9.

### (Configuration of payment system)

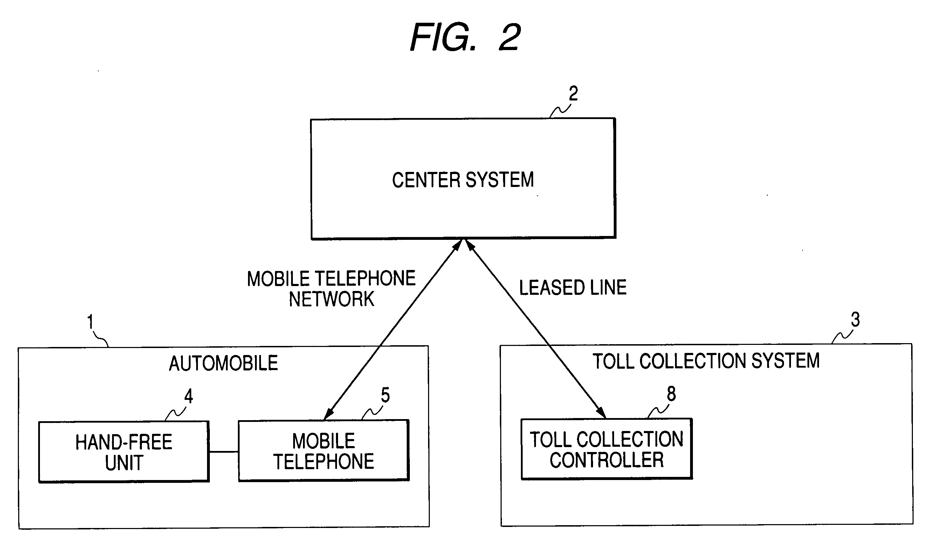

FIG. 2 is a block diagram to show the schematic configuration of a communication payment system according to the first embodiment of the invention. As shown in the figure, the communication payment system includes an automobile 1, a center system (payment management system) 2, and a toll collection system 3.

The automobile 1 includes a hand-free unit (vehicle-installed terminal) 4 as a vehicle-installed unit for enabling the driver to hold a conversation during running and a mobile telephone (communication terminal) 5 usually used by the user. That is, the hand-free unit 4 is installed in the automobile 1 and when the user moves using the automobile 1, the user sets the mobile telephone 5 usually carried with the user in the hand-free unit 4, whereby the system as described above is implemented.

The toll collection system 3 is a system installed at a place where charging is requested to be made to the user in the automobile 1, for example. It is installed at a gate on a toll road such as an expressway or the like. An application example of the toll collection system 3 is described later. The toll collection system 3 includes a toll collection controller 8 as shown in FIG. 2; the more detailed configuration is described later.

The center system 2 is a system for performing centralized management of toll collection. For example, the center system 2 may be managed by the service provider which is collecting a toll by using the toll collection system 3 or may be managed by a third party apart from the service provider, such as a company dedicated to settlement of tolls (credit card dealer or the like).

Communications between the mobile telephone 5 in the automobile 1 and the center system 2 are conducted through a mobile telephone network, for example, which is used for conducting usual conversation or communications for the mobile telephone 5. If the mobile telephone 5 has an Internet connection function, communications may be conducted through the Internet as well as the mobile telephone network. However, to conduct communications through the Internet, preferably enciphered communications, etc., shall be adopted to ensure the security of communications.

Communications between the toll collection controller 8 in the toll collection system 3 and the center system 2 may be conducted through a leased line, for example. The communications may be conducted not only on the leased line, but also through an open communication network such as the Internet. However, preferably a technique of VPN (Virtual Private Network) , etc., for example, is used due to high-security communications to be provided.

FIG. 2 shows one automobile 1 and one toll collection system 3; in fact, however, the center system 2 is connected to a plurality of automobiles 1... an a plurality of toll collection systems 3... The automobile 1 may be able to be connected to more than one center system 2.

### (Configurations of hand-free unit and mobile telephone)

Next, the configurations of the hand-free unit 4 installed in the automobile 1 and the mobile telephone 5 attached to the hand-free unit 4 will be described with reference to FIG. 1. As shown in the figure, the hand-free unit 4 is comprised of an adapter section 6 and a fixed main unit section 7. The mobile telephone 5 is attached to the hand-free unit 4 via the adapter section 6.

The mobile telephone 5 is a usual mobile telephone or a cellular phone used with the Personal Handyphone System (PHS (registered trademark)). The mobile telephone 5 includes a processing section 11, a storage section 12, an input/output section 13, an operation section 14, a display section 15, and an antenna 16.

The processing section 11 controls and executes various types of processing in the mobile telephone 5. The storage section 12 stores various setup values, telephone number data, etc. The input/output section 13 inputs and outputs a signal from and to an external machine (in the embodiment, the hand-free unit 4). The input/output section 13 also contains a speaker and a microphone used in usual conversation through the mobile telephone 5. The operation section 14 accepts operation input of a button, a jog dial, etc., for example. The display section 15 provides information concerning various types of processing in the mobile telephone 5 for the user. The antenna 16 is provided for transmitting and receiving RF signals in conducting communications in the mobile telephone 5 through the mobile telephone network.

As described above, if the mobile telephone 5 is a mobile telephone having a conversation function at the minimum, the communicationpayment system in the embodiment canbe implemented. Of course, the mobile telephone 5 may be provided with an Internet connection function, a Bluetooth (registered trademark) communication function, a camera photographing function, a music playback function, etc., for example, as well as the conversation function.

The adapter section 6 is functioning as an adapter when the mobile telephone 5 is attached to the hand-free unit 4; it includes a switch section 21, a level amplification/conversion section 22, a processing section 23, a storage section 24, and an input/output section 25.

The switch section 21 transfers a signal to and from the input/output section 13 in the mobile telephone 5 and switches connection between the level amplification/conversion section 22 and the input/output section 25 in response to the signal. The level amplification/conversion section 22 performs level amplification/conversion processing of a voice signal transferred between the mobile telephone 5 and the hand-free unit 4. The input/output section 25 performs transfer processing of a conversation start/end signal, a telephone number signal, etc., transferred between the mobile telephone 5 and the hand-free unit 4. The processing section 23 performs mutual conversion processing between the signal based on the specifications of the mobile telephone 5 and the signal based on the specifications of the hand-free unit 4 in the transfer processing in the input/output section 25. The storage section 24 stores conversion data used at the conversion processing time of the processing section 23.

The adapter section 6 can be replaced in response to the model of the mobile telephone 5. Therefore, for example, if the user changes the model of the mobile telephone 5, only the adapter section 6 in the hand-free unit 4 may be replaced. If a plurality of users share one hand-free unit 4 and use differentmodels of themobile telephones 5, the adapter sections 6 can be provided each for each model and the adapter section 6 can be replaced with the appropriate one in response to the model.

The fixed main unit section 7 is arbitrary attached firmly to a fixing part 1a in the automobile 1 and said section includes a processing section (control means) 31, an operation section 32, a storage section (storage means) 33, a voice recognition section (voice recognition means) 34, CODECs 35 and 36, an input/output section 37, a speaker 38, and a microphone 39.

The processing section 31 controls and executes various types of processing in the fixed main unit section 7. The operation section 32 accepts operation input of the user to the fixed main unit section 7 such as comprising various buttons, for example. The storage section 33 stores various setup values, voice recognition data, guidance voice data, personal identification number data, abbreviated number registration data, and the like. The voice recognition section 34 performs processing of recognizing user's voice based on the user's voice information input through the microphone 39. To perform voice recognition, the voice recognition data stored in the storage section 33 is compared (collated) with the user's voice information input.

The CODEC 35 converts an analog voice signal input from the level amplification/conversion section 22 in the adapter section 6 into a digital voice signal and also converts digital voice signal into an analog voice signal and outputs the signal to the level amplification/conversion section 22. The CODEC 36 converts digital voice signal into an analog voice signal and outputs the signal to the speaker 38 and also converts an analog voice signal input from the microphone 39 into a digital voice signal.

The input/output section 37 performs transfer processing of a conversation start/end signal, a telephone number signal, etc., to and from the input/output section 25 in the adapter section 6. The speaker 38 outputs conversation held through the mobile telephones 5 and various voice messages to the user riding in the automobile 1. The microphone 39 converts voice of the user riding in the automobile 1 into a voice signal and inputs the voice signal to the fixed main unit section 7.

As described above, the fixed main unit section 7 is configured to enable the user to hold hand-free conversation through the mobile telephones 5. Therefore, the user riding in the automobile 1 can perform conversation processing through the mobile telephones 5 simply by saying words.

In the configuration, the voice signal is processed as a digital signal in the fixed main unit section 7. Accordingly, it is made possible for the voice recognition section 34 to execute voice recognition and it is also made possible to perform voice adjustment processing of noise reduction, adjustment of the frequency characteristic, etc., for the input/output voice considering noise in the cabin of the automobile 1, etc. The voice adjustment processing may be performed in the processing section 31 or a DSP (Digital Signal Processor) for voice adjustment processing or the like may be provided.

The fixed main unit section 7 may be integrated with a vehicle-installed terminal, such as a navigation system, an AV (audio video) system, or an air conditioning control system. In this case, it is also made possible to control any other function than the conversation processing simply by making voice. The processing state of the fixed main unit section 7 may be displayed appropriately on a display screen of the vehicle-installed terminal.

### (Configuration of processing section in fixedmain unit section)

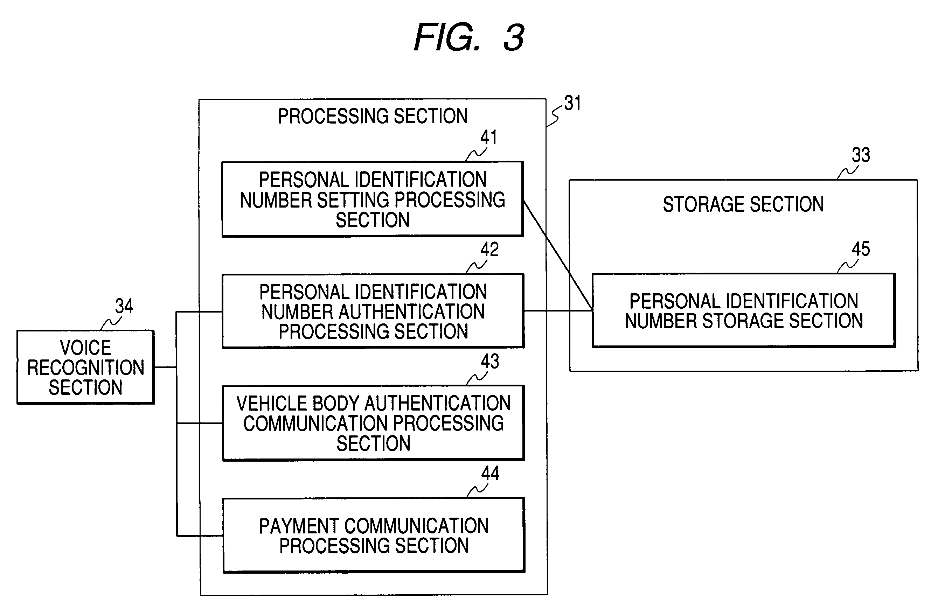

Next, the configuration of the processing section 31 in the fixed main unit section 7 will be discussed with reference to FIG. 3. Although the processing section 31 basically controls various types of operation in the hand-free unit 4, only the functions relevant to payment processing will be discussed below:
As shown in FIG. 3, the processing section 31 includes a personal identification number setting processing section 41, a personal identification number authentication processing section (authentication processing means) 42, a vehicle body authentication communication processing section (vehicle body information communication processing means) 43, and a payment communication processing section (payment communication processing means) 44. The personal identification number setting processing section 41 performs setting processing of the personal identification number set for the hand-free unit 4. The personal identification number set in the personal identification number setting processing section 41 is stored in a personal identification number storage section 45 in the storage section 33.

The personal identification number setting processing will be discussed. The personal identification number set for the hand-free unit 4 is used when the user is authenticated. Therefore, if the personal identification number can be easily changed, a problem arises and thus basically it is necessary to disable change of the personal identification number after the personal identification number is once set. To do this, for example, the personal identification number storage section 45 is implemented as storage means which is only once writable such as field-programmable ROM and when the hand-free unit 4 is first used, personal identification number storage processing is performed. For example, change of the personal identification number may be enabled only when authentication can be obtained. Further, if the personal identificationnumber storage section 45 is removed, it is also considered that the operation of the hand-free unit 4, particularly the operation concerning payment processing is stopped.

The personal identification number authentication processing section 42 performs authentication processing of the personal identification number stored in the personal identification number storage section 45 and the personal identification number entered by the user. In the embodiment, the personal identification number voiced by the user is recognizedby the voice recognition section 34 and authentication processing is performed based on the recognized personal identification number.

The vehicle body authentication communication processing section 43 controls communication processing to perform vehicle body authentication processing to define the correspondence between the automobile 1 to be charged, recognized by the toll collection system 3 and the automobile 1 for which payment processing is performed through the center system 2. That is, vehicle body identification information of the automobile 1 to be charged at the point in time is sent from the toll collection system 3 to the center system 2, and vehicle body identification information of the automobile 1 is sent from the automobile 1 to the center system 2. The center system 2 identifies the automobile 1 to be charged according to the vehicle body identification information sent from the toll collection system 3 and that from the automobile 1, and executes payment processing. In the vehicle body authentication processing, if the vehicle body identification information is input as the user voices the information, the vehicle body identification information is input based on the recognition of the voice recognition section 34.

The payment communication processing section 44 controls communication processing to perform payment processing with the center system 2. In the payment processing, if a payment command, etc., is input as the user voices the command, etc., the payment command, etc., is input based on the recognition of the voice recognition section 34.

The described processing section 31 can be implemented, for example, as a CPU (Central Processing Unit) executes programs for accomplishing the processing operation in the functional blocks of the personal identification number setting processing section 41, the personal identification number authentication processing section 42, the vehicle body authentication communication processing section 43, and the payment communication processing section 44. In FIG. 3, etc., the processing section 31 and the voice recognition section 34 are shown as separate blocks, but the program for providing the function of the voice recognition section 34 may be executed by the CPU of the processing section 31. The programs, which are stored in the storage section 33, for example, are read into work area storage means of RAM, etc., included in the processing section 31 whenever necessary and are executed by the CPU. The storage section 33 storing the programs can be implemented as nonvolatile IC memory such as flash EEPROM or a nonvolatile storage medium such as a hard disk, for example. The programs may be stored in removable media and may be read from the removable media whenever necessary for execution. The programs may be downloaded from an external system through a communication network for execution. Further, the processing section 31 maybe implemented as an IC for providing the functional blocks.

### (Configuration of center system)

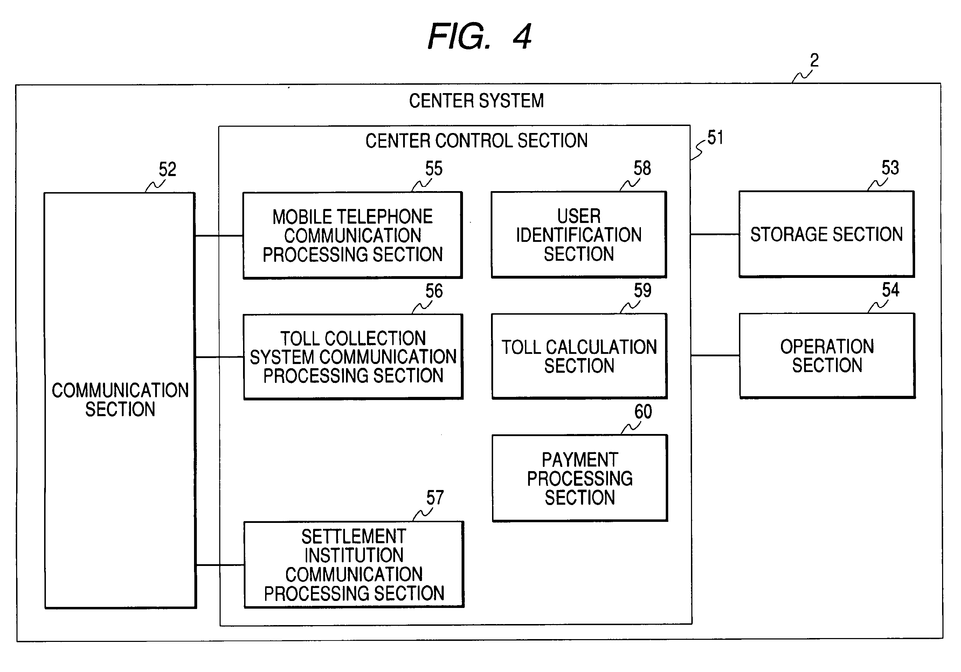

Next, the configuration of the center system 2 will be discussed with reference to FIG. 4. As shown in the figure, the center system 2 includes a center control section 51, a communication section 52, a storage section 53, and an operation section 54.

The communication section 52 is functioning as a communication interface with the mobile telephone 5 installed in the automobile 1 and the toll collection controller 8 in the toll collection system 3. In fact, the communication section 52 is comprisedof apluralityof transmission-reception sections responsive to the communicating parties. The storage section 53 stores various pieces of data used in the center control section 51. The operation section 54 accepts command input of the manager of the center control section 51. Although not shown, display means for displaying the operation state of the center control section 51 may be provided.

The center control section 51 performs centralized control of processing in the center system 2 and includes a mobile telephone communicationprocessing section 55, a toll collection system communication processing section 56, a settlement institution communication processing section 57, a user identification section (user identification means) 58, a toll calculation section (toll recognition means) 59, and a payment processing section (payment processing means) 60.

The mobile telephone communication processing section 55 controls communication processing when the center system 2 conducts communications with the mobile telephone 5. The toll collection system communication processing section 56 controls communication processing when the center system 2 conducts communications with the toll collection controller 8 in the toll collection system 3. The settlement institution communication processing section 57 controls communication processing when the center system 2 conducts communications with the institution for performing actual settlement (payment) processing, such as a bank, a credit company, or a telephone company.

The user identification section 58 defines the correspondence between the user information sent from the mobile telephone 5 and input by the mobile telephone communication processing section 55 and the user information sent from the toll collection system 3 and input by the toll collection system communication processing section 56, and identifies the user. The toll calculation section 59 calculates the toll for the user identified by the user identification section 58 based on the charging information sent from the toll collection system 3 and input by the toll collection system communication processing section 56. The payment processing section 60 sends a payment processing instruction to the settlement organization after receiving permission from the user based on the toll calculated by the toll calculation section 59.

The described center control section 51 can be implemented, for example, as a PC-based computer. In this case, the center control section 51 can be implemented as a CPU executes programs for accomplishing the processing operation in the functional blocks of the mobile telephone communication processing section 55, the toll collection system communication processing section 56, the settlement institution communication processing section 57, the user identification section 58, the toll calculation section 59, and the payment processing section 60. The programs, which are stored in the storage section 53, for example, are read into work area storage means of RAM, etc., included in the center control section 51 whenever necessary and are executed by the CPU. The storage section 53 storing the programs can be implemented as a nonvolatile storage medium such as a hard disk, for example. The programs may be stored in removable media and may be read from the removable media whenever necessary for execution. The programs may be downloaded from an external system through a communication network for execution.

### (Configuration of toll collection system)

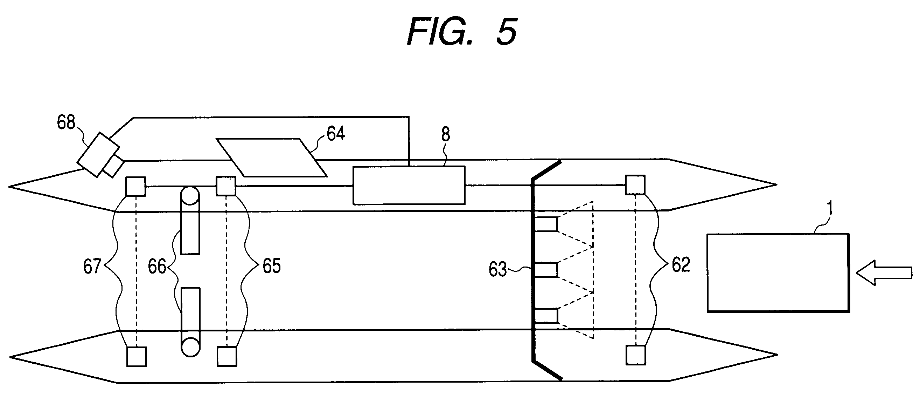

Next, the configuration of the toll collection system 3 will be discussed. Here, a system assuming a gate when a single toll is applied on a toll road such as an expressway will be discussed as a specific example of the toll collection system 3. FIG. 5 is a plan view when the gate is seen from above if the toll collection system 3 is the gate. As shown in the figure, the toll collection system 3 includes a first vehicle separation device 62, a vehicle shape sensor 63, a display panel 64, a second vehicle separation device 65, a blocking gate 66, a third vehicle separation device 67, and a video camera 68 in addition to the toll collection controller 8.

The first to third vehicle separation devices 62, 65, and 67 are provided for detecting entry of the automobile 1 and separating the detected automobiles 1 from each other as one vehicle. At the gate, it is indispensable to detect the vehicle itself with high accuracy, namely, separately detect each vehicle in a vehicle train precisely for collecting a toll. The first to third vehicle separation devices 62, 65, and 67 are provided for conducting precise detection. The first to third vehicle separation devices 62, 65, and 67 conduct vehicle separation detection with optical sensors, for example, and more particularly, conduct vehicle separation detection according to an opposed method, a scattering reflection method, or a method using optical scanning and a regression reflection optical system, and so on. A more detailed description of the vehicle separation devices is disclosed in "OMRON TECHNICS" Vol. 38 No. 4 (Whole Number 128) 1998 ("ETC muke kogata shinnyuu sensor" published on December 20, 1998), etc., for example.

The vehicle shape sensor 63 is a sensor for determining the vehicle type of automobile 1 entering the gate. To automatically collect a toll at the gate, it is necessary to detect the passage vehicle and determine the vehicle type in response to the toll structure. The vehicle shape sensor 63 is provided for this purpose. As the vehicle shape sensor 63, a laser vehicle shape sensor can be named, for example. The laser vehicle shape sensor has a plurality of sensors installed side by side perpendicularly to the traveling direction of the vehicle above the area where the vehicle passes for measuring the vehicle height and the vehicle width. As the vehicle type determination sensor, a laser number-of-axles sensor for detecting the number of axles of a vehicle may be used. A more detailed description of the laser vehicle shape sensor and the laser number-of-axles sensor is given in "OMRON TECHNICS" Vol. 38 No. 4 (Whole Number 128) 1998 ("Laser shakei sensor no kaihatsu" and "Laser jikusuu sensor no kaihatu" published on December 20, 1998), etc., for example.

Thedisplaypanel 64 displays various pieces of information, for example, the toll, the telephone number for making a payment, etc., for the passenger of the automobile 1 passing through the gate. The blocking gate 66 is a gate for blocking traveling of the vehicle not completing a payment. If a vehicle not completing a payment breaks through the inhibition gate 66 and travels, the video camera 68 takes a photograph of the vehicle.

The automobile 1 passes through the gate in the order of the first vehicle separation device 62, the vehicle shape sensor 63, the second vehicle separation device 65, the blocking gate 66, and the third vehicle separation device 67. The first vehicle separation device 62 is intended for first detecting the vehicle entering the gate; the second vehicle separation device 65 is intended for detecting passage of the vehicle after whether or not a payment has been made is determined; and the third vehicle separation device 67 is intended for detecting the vehicle after the vehicle passes through the inhibition gate 66 in a state in which a payment is not complete.

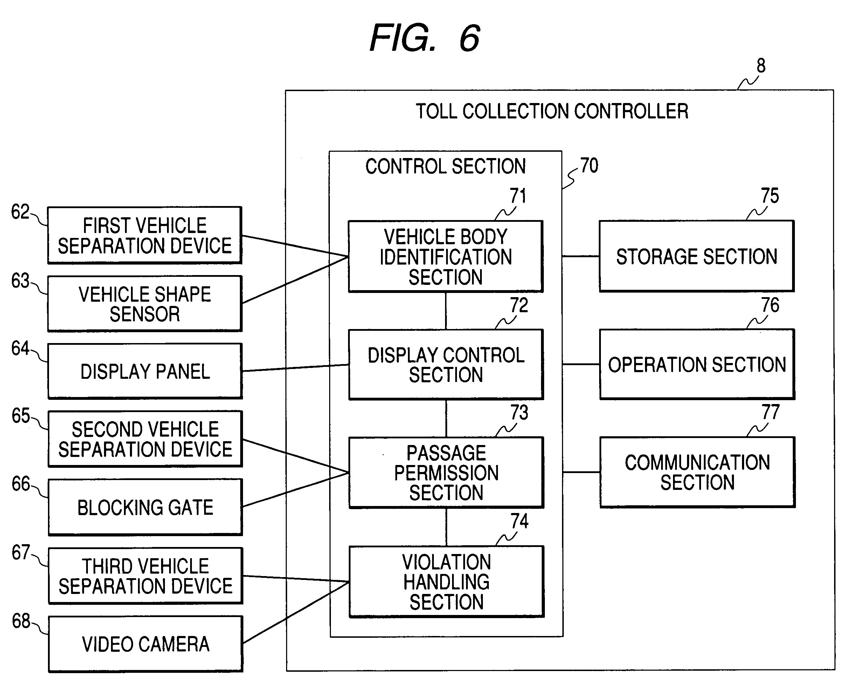

Next, the configuration of the toll collection controller 8 will be discussed with reference to FIG. 6. As shown in the figure, the toll collection controller 8 includes a control section 70, a storage section 75, an operation section 76, and a communication section 77.

The storage section 75 stores various pieces of data used by the control section 70, for example, vehicle-type-specific toll table data, information concerning each vehicle to be charged, picked-up image data of each violating vehicle, and the like. The operation section 76 is used by the manager of the toll collection controller 8 to enter a command into the control section 70. The communication section 77 functions as a communication interface with the center system 2.

The control section 70 includes a vehicle body identification section (vehicle body identification means) 71, a display control section 72, a passage permission section (vehicle body identification information transmission means and passage permission means) 73, and a violation handling section 74. When the vehicle entering the gate is detected by the first vehicle separation device 62 and information concerning the vehicle height and the vehicle width of the vehicle is sent from the vehicle shape sensor 63, the vehicle body identification section 71 determines the vehicle type of the vehicle based on the information. The vehicle body identification section 71 also gives the vehicle body identification information to the automobile 1 to be charged.

The display control section 72 performs control to display the vehicle body unique number as the vehicle body identification information on the display panel 64 for the automobile 1 to be charged and also performs control to display toll information on the display panel 64 based on the toll information sent from the center system 2. The display control section 72 may also display information concerning the telephone number for making a payment on the display panel 64. Further, when a payment is complete, a message indicating that a payment is complete may be displayed on the display panel 64.

In the embodiment, the vehicle body unique number as the vehicle body identification information sent from the automobile 1 is displayed on the display panel 64 and the vehicle body unique number is entered by the passenger of the automobile 1 and is transmitted from the automobile 1 to the center system 2. However, the invention is not limited to it; for example, if a radio communication function such as Bluetooth (registered trademark) is installed in the mobile telephone 5, a unit for communicating with the radio communication function is provided in the toll collection controller 8, whereby the vehicle body unique number can be transferred therebetween.

The passage permission section 73 performs processing of transmitting the result of the vehicle type determination made by the vehicle body identification section 71, information for identifying the vehicle, and the like through the communication section 77 to the center system 2, processing of receiving information concerning payment completion from the center system 2, processing of opening the blocking gate 66 when the payment is complete, and the like.

The violation handling section 74 detects a vehicle attempting to pass through the gate although a payment is not complete based on the detection result of the third vehicle separation device 67, and controls image pickup processing of the video camera 68 for the vehicle. For example, processing of recognizing the number plate, etc., is performed based on the picked-up image data and the recognized number plate is used to identify the passenger of the vehicle.

The described control section 70 can be implemented, for example, as a PC-based computer. In this case, the control section 70 can be implemented as a CPU executes programs for accomplishing the processing operation in the functional blocks of the vehicle body identification section 71, the display control section 72, the passage permission section 73, and the violation handling section 74. The programs, which are stored in the storage section 75, for example, are read into work area storage means of RAM, etc., included in the control section 70 whenever necessary and are executed by the CPU. The storage section 75 storing the programs can be implemented as a nonvolatile storage medium such as a hard disk, for example. The programs may be stored in removable media and may be read from the removable media whenever necessary for execution. The programs may be downloaded from an external system through a communication network for execution.

### (Processing flow in communication payment system)

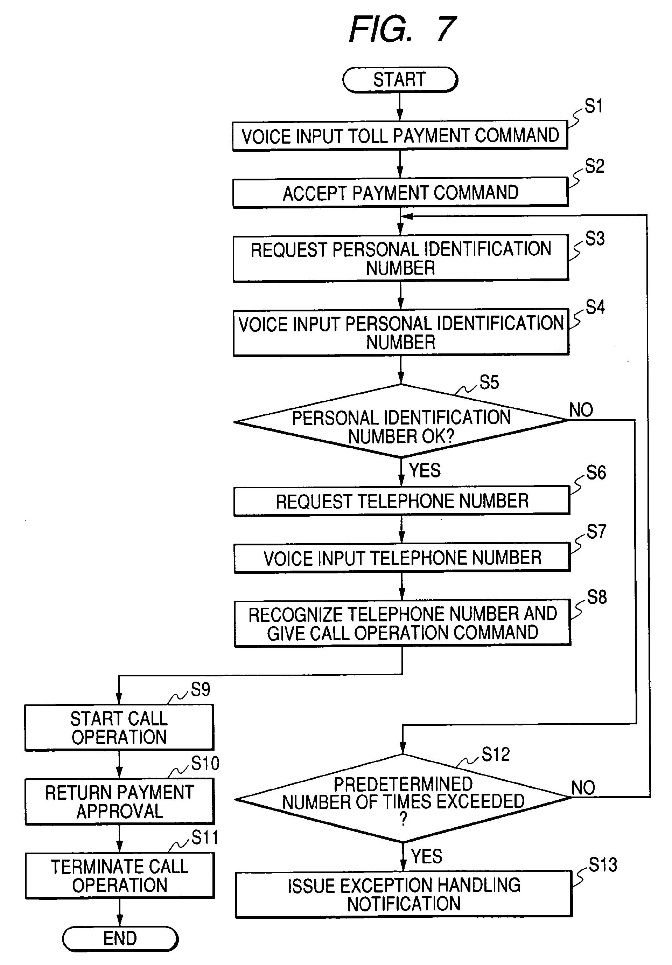

Next, a processing flow in the communication payment system described above will be discussed with reference to FIGS. 7 to 9. In the description that follows, the case where the toll collection system 3 is applied to the gate described above is assumed, but almost similar processing is also performed in other application examples.

### (Processing flow in mobile telephone and hand-free unit)

To begin with, a processing flow in the mobile telephone 5 and the hand-free unit 4 will be discussed with reference to FIG. 7. It is assumed that personal identification number setting processing is already performed by the personal identification number setting processing section 41 in the hand-free unit 4.

When the automobile 1 enters the gate, the toll collection system 3 detects it, determines the vehicle type, and displays the corresponding toll on the display panel 64. The passenger of the automobile 1 sees the display and voices a command for starting toll payment processing, and the voice command is input through the microphone 39 to the hand-free unit 4 (step 1 (S1)). The hand-free unit 4 recognizes the voice command by the voice recognition section 34 and detects the command input as a payment command (S2).

Then, the hand-free unit 4 requests the user to enter the personal identification number by outputting voice from the speaker, etc., for example, (S3). The user voices the personal identification number in response to the request and the voice personal identification number is input through the microphone 39 to the hand-free unit 4 (S4).

When the personal identification number is input, the hand-free unit 4 may request the user to enter information concerning vehicle body authentication (vehicle body authentication information). As the vehicle body authentication information, information about the vehicle type, the vehicle body unique number as the vehicle body identification information, etc., can be named. The vehicle body unique number is usedby the toll collection system 3 to identify the automobile 1 to be charged. For example, it is possible that the assigned unique number linked with the vehicle type determination result for each automobile 1 to be charged is displayed on the display panel 64 and the user is prompted to enter the number.

Next, at S5, the personal identification number authentication processing section 42 checks whether or not the entered personal identification number is valid. The personal identification number authentication processing section 42 performs authentication processing by collating the entered personal identification number with the personal identification number stored in the personal identification number storage section 45. If the personal identification number is invalid (NO at S5), personal identification number input processing is repeated. If it is determined at S12 that personal identification number input processing has been repeated exceeding the predetermined number of times, then an exception handling notification is issued at S13. The exception handling is performed if there is a possibility that the user attempting to make a payment may be an invalid user. That is, in this case, an exception handling notification is issued through the center system 2 to the toll collection system 3, which then performs photographing processing of the automobile 1 with the video camera 68 and the like. The emergency called telephone number at the trouble occurring time containing an authentication failure, etc., is stored in the storage section 33 of the hand-free unit 4, and the exception handling notification is sent to the emergency called telephone number.

On the other hand, if the entered personal identification number is valid (YES at S5), the hand-free unit 4 requests the user to enter the telephone number (S6). The user voices the telephone number such as the abbreviated dialing displayed on the display panel 64, etc., in response to the request, and the voice telephone number is input through the microphone 39 to the hand-free unit 4 (S7). The hand-free unit 4 recognizes the voice by the voice recognition section 34 as the telephone number. Then, the payment communication processing section 44 gives a call operation command to the mobile telephone 5 attached to the hand-free unit 4 (S8).

Upon reception of the call operation command from the hand-free unit 4, the mobile telephone 5 starts the call operation of the specified telephone number (S9) . As the call operation is performed, the mobile telephone 5 enters a communication mode with the center system 2 and the above-mentioned vehicle body authentication information, etc., is sent to the center system 2. To transmit the vehicle body authentication information, the vehicle body authentication communication processing section 43 performs the processing.

The center system 2 calculates the toll based on communications from the toll collection system 3, and transmits a payment approval request to the mobile telephone 5. If the user approves the payment in response to the payment approval request, the approval information is sent from the mobile telephone 5 to the center system 2 (S10). The payment processing is now complete and the call operation terminates (S11).

In the example, the user enters the personal identification number whenever payment processing is performed, but the invention is not limited to it. For example, when the user first rides in the automobile 1, the user may enter the personal identification number and if the personal identification number is authenticated, later the personal identification number input processingmaybe skippeduntil the engine of the automobile 1 is next stopped. In this case, the need for entering the personal identification number for each payment processing is eliminated, so that the convenience of the user canbe enhanced. On the other hand, if the personal identification number is authenticated for each payment processing, security can be provided, for example, if the vehicle is stolen while the user temporarily leaves the automobile 1.

### (Processing flow in toll collection system 3)

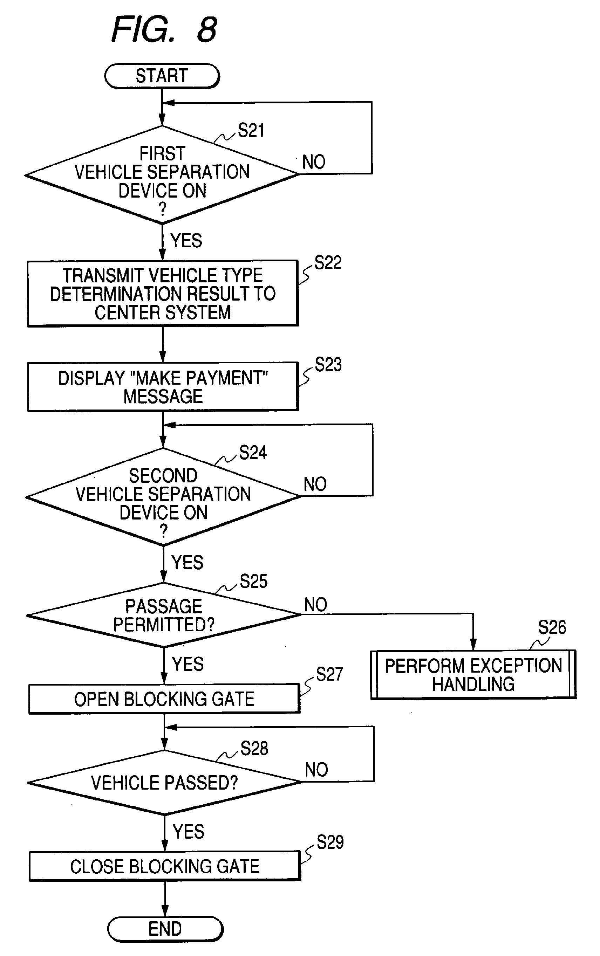

Next, a processing flow in the toll collection system 3 will be discussed with reference to FIG. 8. When the automobile 1 enters the gate, first the first vehicle separation device 62 detects the automobile 1 entering the gate (S21). When the first vehicle separation device 62 detects the automobile 1 entering the gate, the vehicle body identification section 71 determines the vehicle type based on the detection result of the vehicle shape sensor 63. The vehicle type determination result is transmitted through the communication section 77 to the center system 2 (S22). At this time, the vehicle body unique information is also transmitted to the center system 2.

Then, upon reception of toll information from the center system 2, the toll information is displayed on the display panel 64 under the control of the display control section 72 and a message for prompting the passenger of the automobile 1 to make a payment is transmitted to the passenger (S23). The passenger of the automobile 1 sees the message and performs the above-described payment processing.

Next, when the second vehicle separation device 65 detects passage of the automobile 1 (S24), whether or not passage permission is issued is determined at S25. To make this determination, the passage permission section 73 determines whether or not payment is normally complete for the user of the automobile 1 and a passage permission message is received from the center system 2 through the communication section 77.

If it is determined that no passage permission is issued (NO at S25), exception handling is performed (S26). In the exception handling, after passage of the automobile 1 is checked in the third vehicle separation device 67, the violation handling section 74 causes the video camera 68 to start picking up an image, stores the picked-up image data in the storage section 75, and transmits the image data to the center system 2.

On the other hand, if it is determined that passage permission is issued (YES at S25), the blocking gate 66 is opened under the control of the passage permission section 73 (S27). After passage of the automobile 1 is acknowledged (S28), the blocking gate 66 is closed (S29). The blocking gate 66 may be controlled so that it is closed only if the automobile 1 to which no passage permission is issued exists.

### (Processing flow in center system)

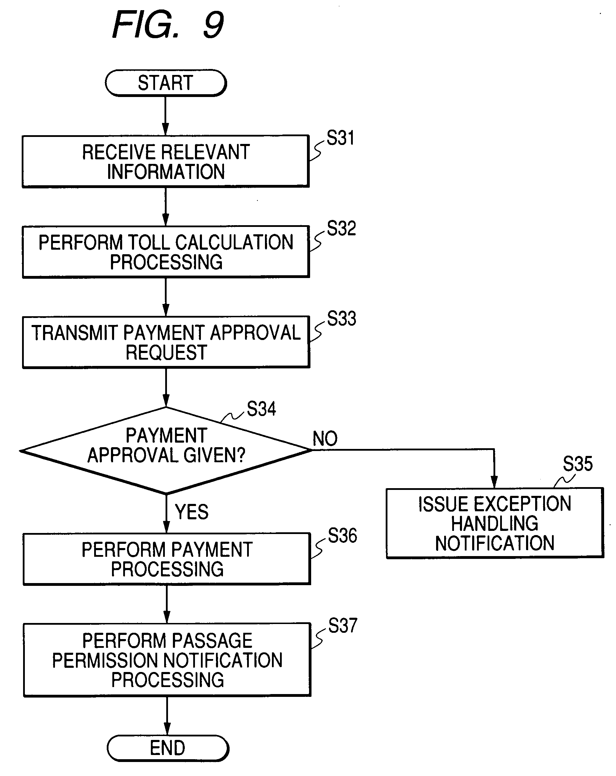

Next, a processing flow in the center system 2 will be discussed with reference to FIG. 9. When the toll collection system 3 detects the automobile 1 entering the gate, the vehicle body authentication information of the vehicle body unique number as vehicle body identification information, vehicle type determination information, etc., of the automobile 1 is sent to the center system 2. The information is recognized by the toll collection system communication processing section 56 through the communication section 52. On the other hand, when toll payment processing is started in the automobile 1, the vehicle body authentication information and calling party number information are sent from the mobile telephone 5 to the center system 2. The information is recognized by the mobile telephone communication processing section 55 through the communication section 52 (S31). In FIG. 9, the information sent from the toll collection system 3 and the information sent from the mobile telephone 5 are called relevant information.

Then, the user identification section 58 checks the correspondence between the information sent from the toll collection system 3 and the information sent from the mobile telephone 5 and further identifies the user by the calling party number and the toll calculation section 59 calculates the toll for the user based on it (S32). When the toll is calculated, the toll information is transmitted to the toll collection system 3 through the toll collection system communication processing section 56 and the communication section 52, and is also transmitted to the mobile telephone 5 through the mobile telephone communication processing section 55 and the communication section 52. A payment approval request is transmitted to the mobile telephone 5 (S33).

Then, the payment processing section 60 determines whether or not payment approval is given from the mobile telephone 5 (S34). If no payment approval is given (NO at S34), an exception handling notification is issued to the toll collection system 3 (S35) . Upon reception of the exception handling notif ication, the toll collection system 3 performs photographing processing of the automobile 1 with the video camera 68 and the like. The possible case where no payment approval is given is the case where the user cannot agree to the offered toll.

On the other hand, if payment approval is acknowledged (YES at S34), the payment processing section 60 performs payment processing (S36). To perform the payment processing, payment information corresponding to the user is transmitted to the settlement institution through the settlement institution communication processing section 57 and the communication section 52, and settlement acknowledge is received from the settlement institution. As the settlement method, it is possible to automatically deduce from the user's bank account, issue billing to the credit company, issue billing to the telephone company, etc., for example. Upon completion of the payment processing, a passage permission notification is sent to the toll collection system 3 (S37).

### (Exception handling)

The above-mentioned exception handling will be discussed. The automobile 1 passing through the toll collection system 3 without making a payment is photographed with the video camera 68, as described above. The picked-up image is transmitted to the center system 2, for example, and the automobile 1 and the user are identified in the center system 2. As the identification method, it is possible to conduct image recognition of the number plate of the automobile 1 from the image data and identify the automobile 1 and the user based on the number plate information. If image recognition of the number plate cannot be conducted for some reason, the number plate may be identified by visual inspection of the image by a human being or the like.

In the exception handling, the number plate is recognized based on the picked-up image in the example. However, if a radio IC tag capable of transmitting number plate information will be built in the number plate of the automobile 1 in the future, the radio IC tag can be used to identify the violating automobile 1.

### (Vehicle type determination system)

In the example, the toll collection system 3 determines the vehicle type, but the invention is not limited to it. For example, vehicle type determination information may be previously stored in the storage section 33 in the hand-free unit 4 and when a payment is made, the vehicle type determination information may be read from the storage section 33 and sent to the center system 2. In this case, basically, change of the information in the vehicle type determination information storage section needs to be inhibited after the information is once set as in the personal identification number storage section 45. Thus, if the vehicle type determination information is stored in the hand-free unit 4 and is read and sent to the center system 2, it is made unnecessary to install the system for determining the vehicle type (the vehicle shape sensor 63 in the example) in the toll collection system 3.

### (Personal identification number input check system)

As the personal identification number input system in the hand-free unit 4, the system wherein the user enters the personal identification number by voice and the personal identification number is recognized by voice recognition and is checked is shown in the example, but the invention is not limited to it. For example, the user may be authenticated by any of the following methods: (1) Method in which the user enters the personal identification number through the operation section 14 of the mobile telephone 5 with the mobile telephone 5 not attached to the hand-free unit 4 and the entered personal identification number is transmitted from the mobile telephone 5 to the hand-free unit 4 by optical communication means such as IrDA or radio means such as Bluetooth (registered trademark) ; (2) method in which the user enters the personal identification number through the operation section 14 of the mobile telephone 5 with the mobile telephone 5 attached to the hand-free unit 4 and the entered personal identification number is transmitted from the mobile telephone 5 to the hand-free unit 4; (3) method in which the voice of the user is previously stored in the hand-free unit 4 as a voice print and when the user enters thepersonalidentificationnumberbyvoice, the enteredpersonal identification number is collated with the voice print data for authentication; (4) method in which biometric means, such as fingerprint recognition means, face recognition means, retina recognition means, or iris recognition means, is built in the hand-free unit 4 for authenticating the user, etc.

### (Two-step authentication system)

In the example, the user is authenticated by personal identification number collation in the hand-free unit 4, but a unique personal identification number can also be given to the mobile telephone 5 for authenticating the user in two steps to provide a furthermore advanced security function. Specifically, at S9 in the flowchart of FIG. 7, when the mobile telephone 5 is connected to the center system 2, the center system 2 again requests the mobile telephone 5 to transmit the personal identification number and the user to enter the personal identification number. That is, the center system 2 has a database storing the correspondence between the users and the personal identification numbers and also authenticates the user by referencing the database. As authentication processing is thus performed in two steps in the hand-free unit 4 and the center system 2, it is made possible to ever more enhance security.

### (Other examples of hand-free unit)

In the example, the hand-free unit 4 is made up of the fixed main unit section 7 and the adapter section 6 with the mobile telephone 5 attached to the adapter section 6 for use, as shown in FIG. 1. However, any of the following types of hand-free unit can also be adopted: (1) Type wherein an earphone receiver and telephone transmission means such as a microphone on a cable are provided; (2) type wherein the hand-free unit main unit having a socket into which a mobile telephone can be inserted is attached to a sun visor for connection to external speaker and microphone of the main unit; (3) type wherein the hand-free unit main unit is installed on the side or the rear of a sheet, etc.

In the example, communications with the center system 2 are conducted using the mobile telephone 5. However, not only the mobile telephone, but also any communication terminal may be used if the communication terminal has a communication function similar to that of the mobile telephone.

### (Other application examples of toll collection system)

In the example, the toll collection system 3 is applied to a gate on a toll road. However, the toll collection system 3 can be applied to any of the following systems: (1) Entrance and exit gates on toll road; (2) gate in parking lot with charge; (3) payment in gasoline station or drive through; (4) payment on ferry; (5) combined system with ETC, etc.

(1) To apply the toll collection system 3 to entrance and exit gates on a toll road, the vehicle passing the gate is only identified and a toll is not collected at the entrance gate and a toll is collected at the exit gate. In this case, the toll collection system 3 implementing the entrance gate transmits the vehicle type determination information, vehicle body identification information, and entrance information concerning the automobile 1 passing the gate to the center system 2, which then stores the information for a predetermined time. Then, the toll collection system 3 implementing the exit gate transmits the vehicle type determination information and vehicle body identification information concerning the entering automobile 1 to the center system 2. On the other hand, vehicle body identification information, calling party number information, and the like are transmitted from the automobile 1 to the center system 2. The center system 2 identifies the automobile 1 to be charged based on the relevant information transmitted from the toll collection system 3 and the automobile 1, and checks the stored information at the entrance gate to calculate the toll and then transmits the toll information to the toll collection system 3 implementing the exit gate. The toll collection system 3 implementing the exit gate performs payment processing based on the toll information.

(2) To apply the toll collection system 3 to a gate in a parking lot with charge, when the automobile 1 enters the parking lot, information identifying the vehicle, the entry time, and the like are stored and when the automobile 1 exits the parking lot, a toll is calculated from the entry time, etc., and a payment is made. When the automobile 1 heads for the parking lot rather than enters the parking lot, the user can reserve the parking lot and the center system 2 can store the information, thereby eliminating the need for operation when the automobile 1 enters the parking lot.

(3) To apply the toll collection system 3 to a payment in a gasoline station or drive through, the driver enters purchase information, personal identification number information, etc., whereby payment processing can be performed. A reservation method can also be adopted as in the application example described above in (2).

(4) To apply the toll collection system 3 to a payment on a ferry, basically a payment can be made in a similar manner to the processing at the gate on a toll road described above. A reservation method can also be adopted as in the application example described above in (2) , in which case it is made possible to shorten the processing time when the vehicle rides on the ferry.

(5) In the ETC, if the driver enters the gate and passes through the radio communication area while the driver forgets to insert a payment card into an ETC terminal or forgets to turn on the power of the ETC terminal, the driver cannot perform recovery operation and must once back the vehicle and again perform regular operation from the beginning or manual toll collection must be conducted; this is a problem. In this case, the vehicle stops for a given time in the gate and further is backed, and a problem of occurrence of congestion or causing an accident occurs. To solve the problem, if the system of the invention is adopted, when the driver forgets to insert a payment card or forgets to turn on the power of the ETC terminal and cannot make a payment with the ETC, it is made possible to make a payment with the mobile telephone 5 as an alternative method and confusion as described above can be prevented.

### (Second embodiment)

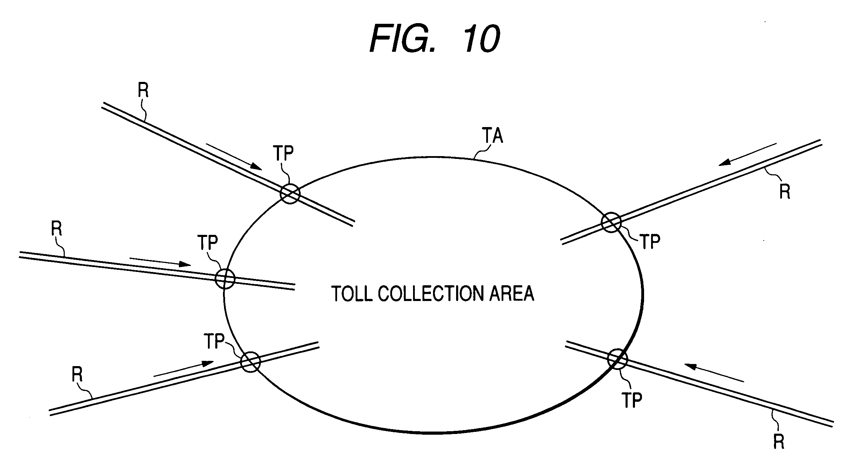

A second embodiment of the invention will be discussed with reference to FIGS. 10 to 18. Components similar to those previously described with reference to FIGS. 1 to 9 in the first embodiment are denoted by the same reference numerals in FIGS. 10 to 18 and will not be discussed again.

A communication payment system in the second embodiment realizes a toll payment in a road pricing system for charging a vehicle entering a specific region. FIG. 10 is a drawing to describe the concept of the road pricing system. As shown in the figure, if a toll collection area TA is set for a specific region, toll collection points TP... are provided at border points of the toll collection area TA on roads R... leading to the toll collection area TA. An automobile 1 entering the toll collection area TA from the outside of the toll collection area TA is charged.

### (Configuration of communication payment system)

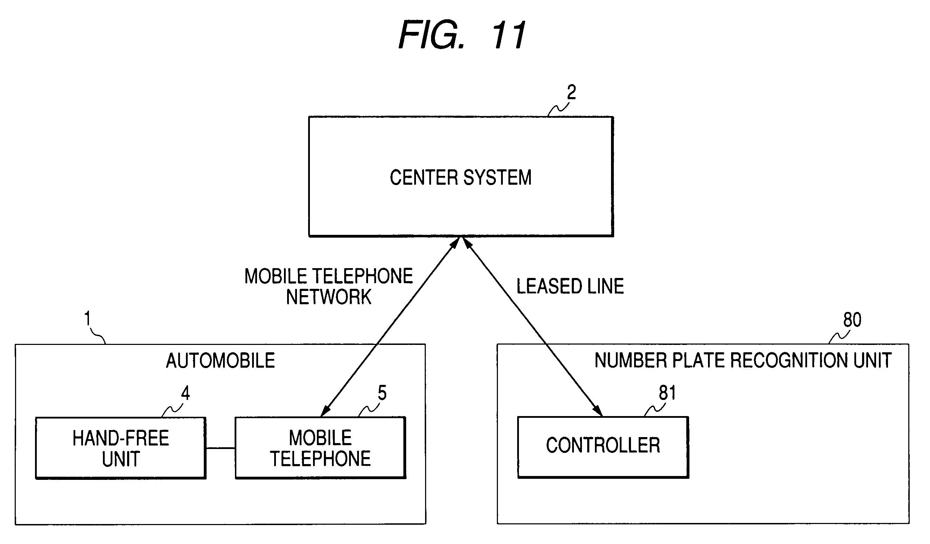

FIG. 11 is a block diagram to show the schematic configuration of a communication payment system according to the second embodiment of the invention. As shown in the figure, the communication payment system includes an automobile 1, a center system 2, and a number plate recognition unit 80 (toll collection system).

The automobile 1 and the center system 2 are almost similar to those in the first embodiment. The differences between the automobile 1 and the center system 2 in the first embodiment and those in the second embodiment are described later.

The number plate recognition unit 80 is a unit for recognizing the number plate of the automobile 1 passing through one toll collection point TP. The number plate recognition unit 80 includes a controller 81 as shown in FIG. 11; the more detailed configuration of the number plate recognition unit 80 is described later.

Communications between the mobile telephone 5 in the automobile 1 and the center system 2 are conducted through a mobile telephone network for conducting usual conversation and communications in the mobile telephone 5, for example. If the mobile telephone 5 has an Internet connection function, communications may be conducted through the Internet as well as the mobile telephone network. However, to conduct communications through the Internet, preferably enciphered communications, etc., are adopted to provide security of communications.

Communications between the controller 81 in the number plate recognition unit 80 and the center system 2 are conducted through a leased line, for example. The communications may be conducted not only on the leased line, but also through an open communication network such as the Internet. However, preferably a technique of VPN (Virtual Private Network), etc., for example, is used because security of communications needs to be provided.

FIG. 11 shows one automobile 1 and one number plate recognition unit 80; in fact, however, the center system 2 is connected to a plurality of automobiles 1... an a plurality of number plate recognition units 80... The automobile 1 may be able to be connected to more than one center system 2.

### (Configurations of hand-free unit and mobile telephone)

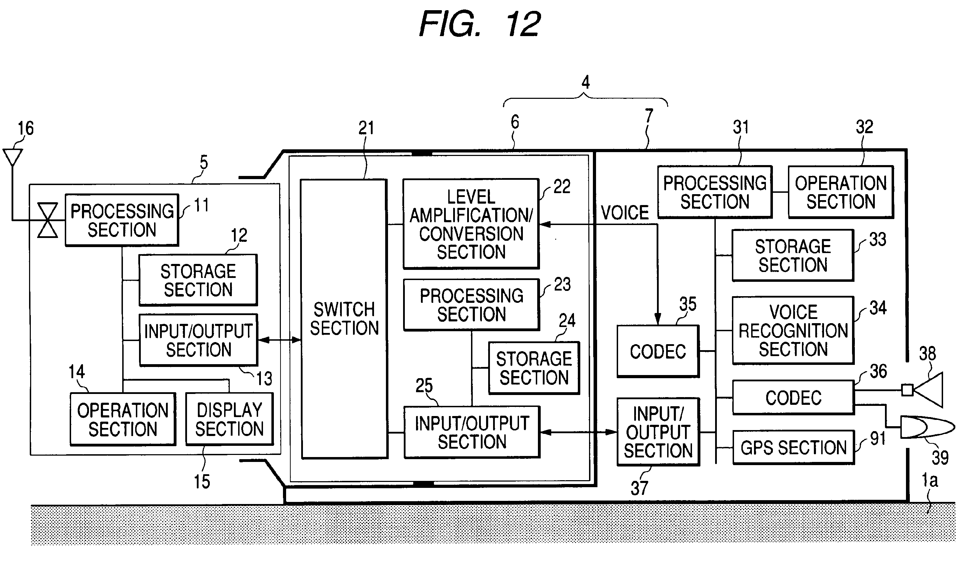

Next, the configurations of the hand-free unit 4 installed in the automobile 1 and the mobile telephone 5 attached to the hand-free unit 4 will be discussed with reference to FIG. 12. As shown in the figure, the hand-free unit 4 includes a GPS section (position information acquisition means) 91 in a fixed main unit section 7 in addition to the components shown in the first embodiment. Other components are as shown in the first embodiment and therefore will not be discussed again. The mobile telephone 5 is also as shown in the first embodiment and therefore will not be discussed again.

The GPS section 91 uses the GPS (Global Positioning System) to acquire the current position of the automobile 1 in which the hand-free unit 4 is installed.

### (Configuration of processing section in fixed main unit section)

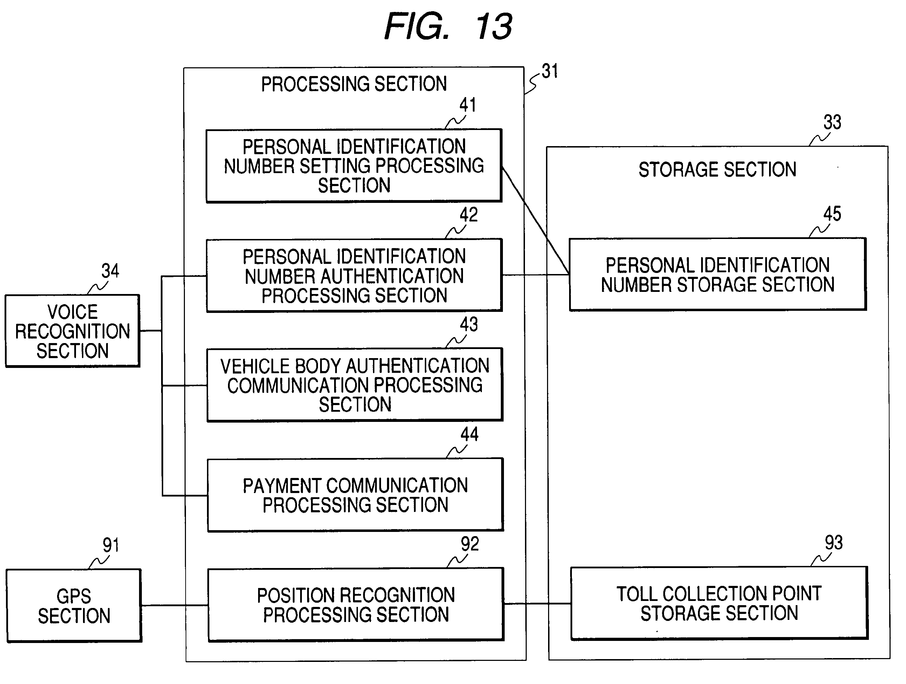

Next, the configuration of a processing section 31 in the fixed main unit section 7 will be discussed with reference to FIG. 13. As shown in the figure, the processing section 31 in the second embodiment differs from that in the first embodiment in that it includes a position recognition processing section 92 connected to the GPS section 91. Other components are similar to those in the first embodiment and therefore will not be discussed again. A storage section 33 is provided with a toll collection point storage section 93.

The position recognition processing section (position recognition processing means) 92 monitors current position information acquired by the GPS section 91 and when the current position matches any of the toll collection points TP... stored in the toll collection point storage section 93, the position recognition processing section 92 performs processing of starting payment processing. The road pricing system in the embodiment assumes an example wherein the automobile is charged when it enters the toll collection area TA. In this case, payment processing is started only when the current position moves from the outside of the toll collection area TA to the inside thereof.

### (Configuration of number plate recognition unit)

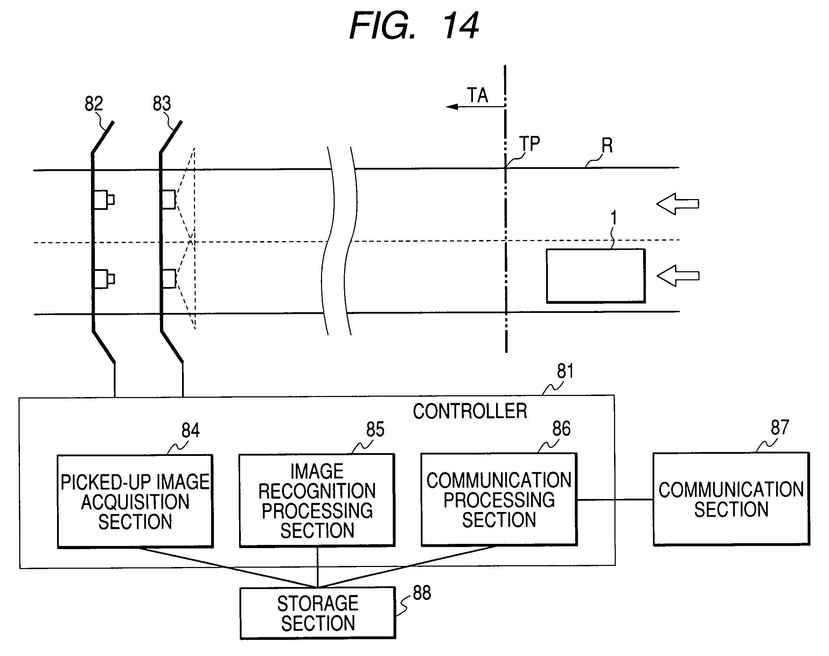

Next, the configuration of the number plate recognition unit 80 will be discussed. FIG. 14 is a drawing to show the state of a road R in the proximity of a toll collection point TP and the configuration of the number plate recognition unit 80. The number plate recognition unit 80 includes an optical shower sensor 83 anda video camera 82 in addition to the controller 81.

The optical shower sensor 83 is a sensor for applying light from above the road R and detecting the reflected light, thereby detecting the vehicle passing through the point. The video camera 82 takes a photograph of the passing vehicle detected by the optical shower sensor 83. The optical shower sensor 83 and the video camera 82 are placed above the road R in the traveling direction of the automobile 1 from the toll collection point TP. Preferably, the installation position is a position considering the traveling distance of the automobile 1 by the time payment processing is complete after the automobile 1 starts the payment processing at the toll collection point TP.

The controller 81 includes a picked-up image acquisition section 84, an image recognition processing section (vehicle body identification means) 85, and a communication processing section (payment completion recognition means) 86, as shown in FIG. 14. The picked-up image acquisition section 84 performs processing of acquiring image data photographed by the video camera 82. The acquired image data is stored in a storage section 88. The image recognition processing section 85 performs image recognitionprocessing for the image data acquired by the picked-up image acquisition section 84 and acquires number plate information of the automobile 1 photographed. The acquired number plate information is stored in the storage section 88.

The communication processing section 86 performs communication processing with the center system 2 through a communication section 87. Specifically, when the number plate information of the automobile 1 completing payment processing is sent from the center system 2, the number plate information of the automobile 1 completing payment processing and the image data corresponding to the number plate information are erased from the storage section 88. If there is number plate information remaining stored in the storage section 88 for a predetermined time, the number plate information and its corresponding image data are transmitted to the center system 2. That is, the fact that the number plate information remains stored in the storage section 88 for a predetermined time means that the automobile 1 enters the toll collection area TA without making a payment and therefore the center system 2 performs exception handling.

### (Processing flow in communication payment system)

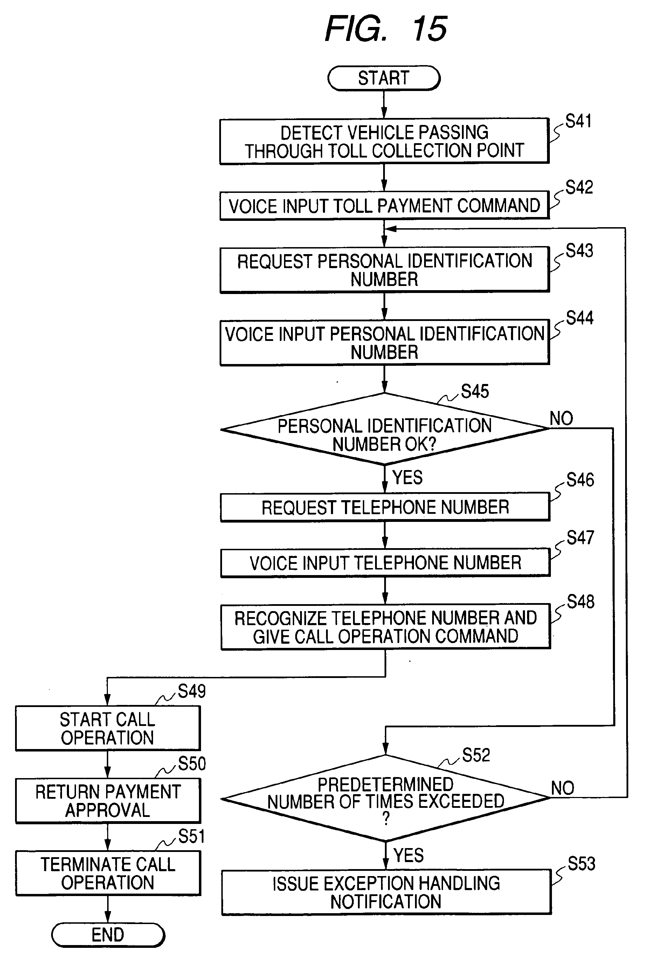

Next, a processing flow in the communication payment system described above will be discussed with reference to FIGS. 15 to 17.

### (Processing flow in mobile telephone and hand-free unit)

To begin with, a processing flow in the mobile telephone 5 and the hand-free unit 4 will be discussed with reference to FIG. 15. It is assumed that personal identification number setting processing is already performed by a personal identification number setting processing section 41 in the hand-free unit 4.

When the automobile 1 passes through the toll collection point TP in the direction in which the automobile 1 enters the toll collection area TA, the position recognition processing section 92 detects the passage of the automobile based on the detection of the GPS section 91 (S41). Here, a message prompting the passenger of the automobile 1 to make a payment is transmitted to the passenger by voice output from a speaker 38, for example. The passenger of the automobile 1 voices a command for starting toll payment processing in response to the message, and the voice command is input through a microphone 39 to the hand-free unit 4. The hand-free unit 4 recognizes the voice command by a voice recognition section 34 and detects the command input as a payment command (S42).

Then, the hand-free unit 4 requests the user to enter the personal identification number by outputting voice from the speaker, etc., for example, (S43). The user voices the personal identification number in response to the request and the voice personal identification number is input through the microphone 39 to the hand-free unit 4 (S44).

When the personal identification number is input, number plate information is also input as vehicle body authentication information. The number plate information may be entered by voice of the user or may be previously stored in the hand-free unit 4, for example.

Next, at S45, a personal identification number authentication processing section 42 checks whether or not the entered personal identification number is valid. The personal identification number authentication processing section 42 performs authentication processing by collating the entered personal identification number with the personal identification number stored in a personal identification number storage section 45. If the personal identification number is invalid (NO at S45), personal identification number input processing is repeated. If it is determined at S52 that personal identification number input processing has been repeated exceeding the predetermined number of times, then an exception handling notification is issued at S53 as at S13 in the flowchart of FIG. 7.

On the other hand, if the entered personal identification number is valid (YES at S45), the hand-free unit 4 requests the user to enter the telephone number (S46). The user voices the telephone number such as the abbreviated dialing for calling the center system 2 in response to the request, and the voice telephone number is input through the microphone 39 to the hand-free unit 4 (S47). The hand-free unit 4 recognizes the voice by the voice recognition section 34 as the telephone number. Then, a payment communication processing section 44 gives a call operation command to the mobile telephone 5 attached to the hand-free unit 4 (S48).

Upon reception of the call operation command from the hand-free unit 4, the mobile telephone 5 starts the call operation of the specified telephone number (S49). As the call operation is performed, the mobile telephone 5 enters a communication mode with the center system 2 and a vehicle body authentication communication processing section 43 sends the above-mentioned vehicle body authentication information (number plate information), etc., is sent to the center system 2.

The center system 2 calculates the toll based on communications from the toll collection system 3, and transmits a payment approval request to the mobile telephone 5. If the user approves the payment in response to the payment approval request, the approval information is sent from the mobile telephone 5 to the center system 2 (S50). The payment processing is now complete and the call operation terminates (S51). (Processing flow in number plate recognition unit)

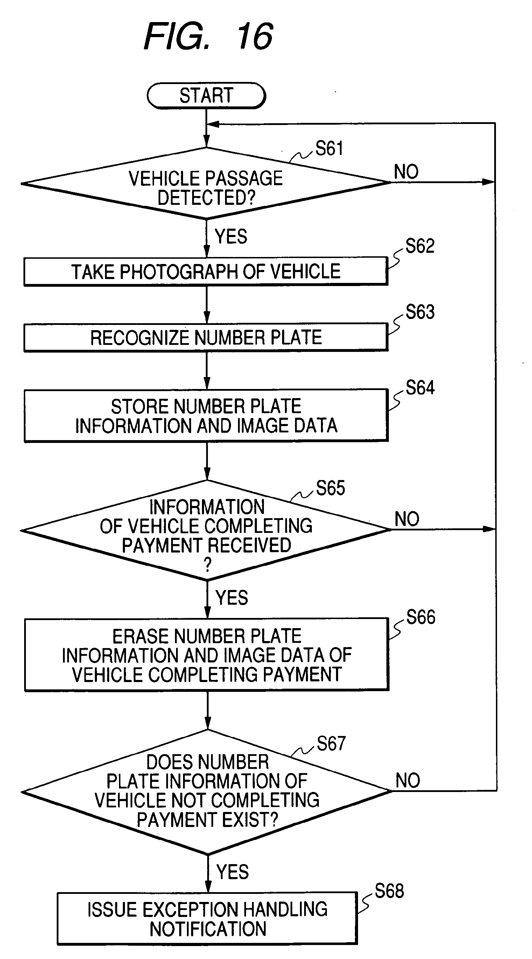

Next, a processing flow in the number plate recognition unit 80 will be discussed with reference to FIG. 16. When the optical shower sensor 83 detects a vehicle passing through the toll collection point (S61), the video camera 82 takes a photograph of the vehicle (S62). The image recognition processing section 85 performs image recognition for the photographed image data and acquires number plate information (S63). The photographed image data and the acquired number plate information are stored in the storage section 88 (S64).

On the other hand, at S65, whether or not the number plate information of the automobile 1 completing a payment has been sent from the center system 2 is checked. If the number plate information is received, the number plate information and its corresponding image data are erased from the storage section 88 (S66).

At S67, if the predetermined time has elapsed since the detected number plate information in the storage section 88 was stored in the storage section 88, it is determined that the automobile 1 entered the toll collection area TA without making a payment, and the center system 2 issues an exception handling notification.

### (Processing flow in center system)

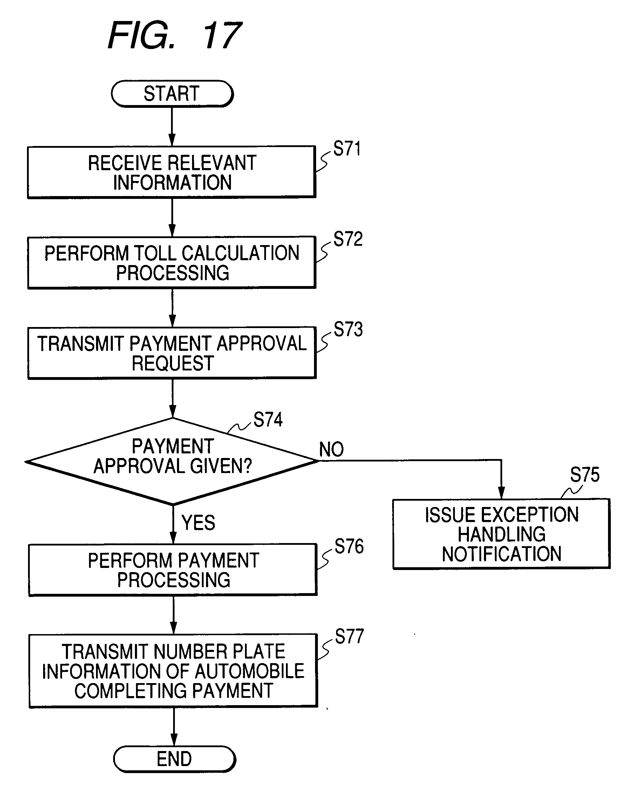

Next, a processing flow in the center system 2 will be discussed with reference to FIG. 17. When the automobile 1 passing through the toll collection point TP is detected and payment processing is performed, the vehicle body authentication information of the number plate information, etc., of the automobile 1 and calling party number information are sent to the center system 2. The information is recognized by a mobile telephone communication processing section 55 through a communication section 52 (S71). In FIG. 17, the information sent from the mobile telephone 5 of the automobile 1 is called relevant information.

Then, the toll calculation section 59 calculates the toll for the user based on the information sent from the mobile telephone 5 by a user identification section 58 (S72). When the toll is calculated, the toll information is transmitted to the mobile telephone 5 through the mobile telephone communication processing section 55 and the communication section 52. A payment approval request is transmitted to the mobile telephone 5 (S73).

Then, a payment processing section 60 determines whether or not payment approval is given from the mobile telephone 5 (S74). If no payment approval is given (NO at S74) , an exception handling notification is issued to the toll collection system 3 (S75).

On the other hand, if payment approval is acknowledged (YES at S74) , the payment processing section 60 performs payment processing (S76). To perform the payment processing, payment information is transmitted to the settlement institution through a settlement institution communication processing section 57 and the communication section 52, and settlement acknowledge is received from the settlement institution. As the settlement method, it is possible to automatically deduce from the user's bank account, issue billing to the credit company, issue billing to the telephone company, etc., for example. Upon completion of the payment processing, the number plate information of the automobile completing the payment is transmitted to the number plate recognition unit 80 (S77).

### (Application example to toll collection across points)

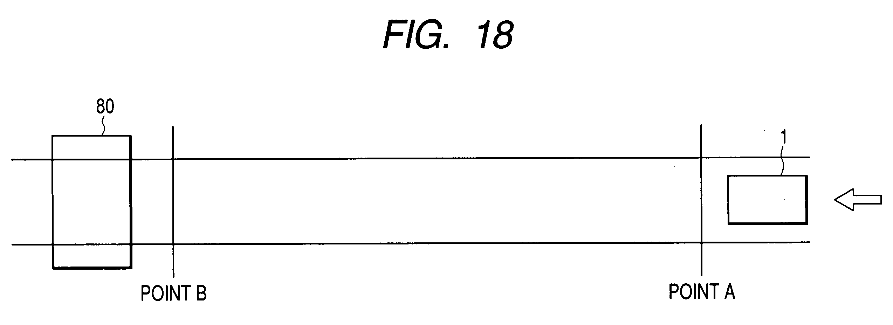

Applying of the above-described communication payment system to a free-flow section toll collection system will be discussed with reference to FIG. 18. In this case, the number plate recognition unit 80 is installed ahead of a toll collection point B in the traveling direction of the automobile 1. First, when the automobile 1 enters a toll collection point A, the hand-free unit 4 is started as described above. At this point in time, point information A is stored in the storage section 33. Next, when the automobile 1 enters the toll collection point B, the hand-free unit 4 also transmits the point information A to the center system 2 in performing payment processing as described above, and the center system 2 considers the point information A to perform payment processing similar to that of the road pricing described above.

### (Other examples of user identification system)

In the first and second embodiments described above, the personal identification number authentication processing section 42 identifies the user by collating the user-entered personalidentification number withthe personal identification number stored in the personal identification number storage section 45. In contrast, the user may be identified using the mobile telephone 5 of the user.

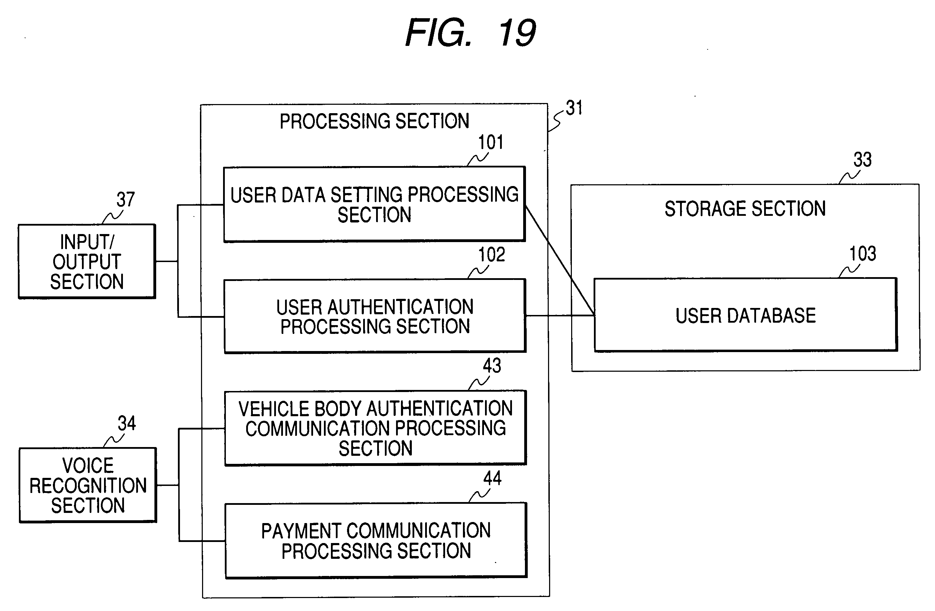

FIG. 19 shows the configuration of processing section 31 when the example is applied to the configuration of the system of the first embodiment. The processing section 31 differs from the processing section 31 previously described with reference to FIG. 3 in that it includes a user data setting processing section 101 and a user authentication processing section 102 in place of the personal identification number setting processing section 41 and the personal identification number authentication processing section 42 and the user authentication processing section 102 acquires proper information to the mobile telephone 5 from the input/output section 37 and identifies the user based on a user database 103.

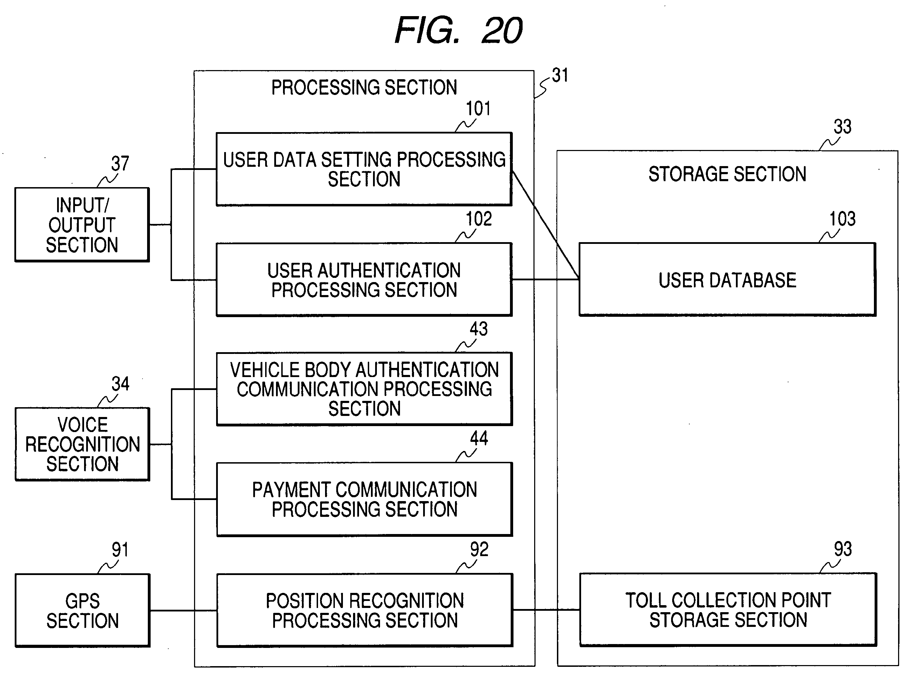

FIG. 20 shows the configuration of processing section 31 when the example is applied to the configuration of the system of the second embodiment. The processing section 31 differs from the processing section 31 previously described with reference to FIG. 13 in that it includes a user data setting processing section 101 and a user authentication processing section 102 in place of the personal identification number setting processing section 41 and the personal identification number authentication processing section 42 and the user authentication processing section 102 acquires proper information to the mobile telephone 5 from the input/output section 37 and identifies the user based on a user database 103.

A method of using the mobile telephone 5 to identify the user will be described. Nowadays, it becomes very common for each person to have his or her own mobile telephone 5 for use becomes widespread. Therefore, if the individual difference of the mobile telephone 5 can be detected, whereby the user of the mobile telephone 5 can be also determined.

That is, proper information for enabling the individual of the mobile telephone 5 to be determined may be previously registered in the user database 103 by the user data setting processing section 101. When the user is identified, the proper information to the mobile telephone 5 attached at the point in time through the adapter section 6 may be read and collated with the proper information stored in the user database 103.

As the proper information to the mobile telephone 5, telephone number information of the mobile telephone 5 stored therein, owner information, device-proper data, etc., can be named, but the proper information to the mobile telephone 5 is not limited.

A mobile telephone in which an IC card chip for subscriber identification is stored is almost practical use for the next-generation mobile telephone. It is expected that applications will be installed on the IC card chip for subscriber identification and will be combined with Java (registered trademark) application executed by the mobile telephone to provide various services in the future. For example, it is possible that the user can receive services of electronic money, membership card, etc., requiring security using the mobile telephone. That is, in the invention, the proper information to the mobile telephone 5 can be retrieved from the IC card chip for subscriber identification.

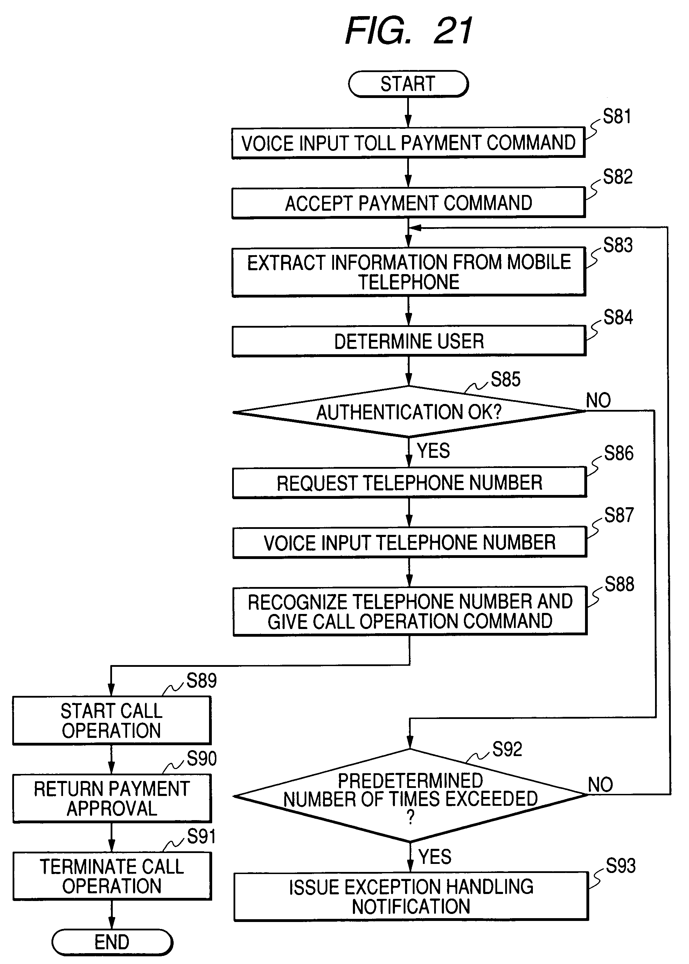

FIG. 21 shows a processing flow in the mobile telephone 5 and the hand-free unit 4 when the example is applied to the system of the first embodiment. Steps S81, S82, and S86 to S91 in FIG. 21 are similar to steps S1, S2, and S6 to S11 previously described with reference to FIG. 7 in the first embodiment and therefore will not be discussed again.

When a payment command is accepted at S82, the user is instructed to attach the mobile telephone 5 to the adapter section 6 under voice guidance, etc., and after it is confirmed that the mobile telephone 5 is attached, the proper information is read from the mobile telephone 5 (S83). Then, the user authentication processing section 102 collates the extracted proper information with the proper information stored in the user database 103, thereby determining the user (S84) and the user is authenticated (S85). If the user can be authenticated, S86 and the later steps are executed; if the user cannot be authenticated, the proper information extraction processing is repeated by instructing the user to check that the mobile telephone is attached, etc., for example. If it is determined at S92 that the authentication processing has been repeated exceeding the predetermined number of times, then an exception handling notification is issued at S93.

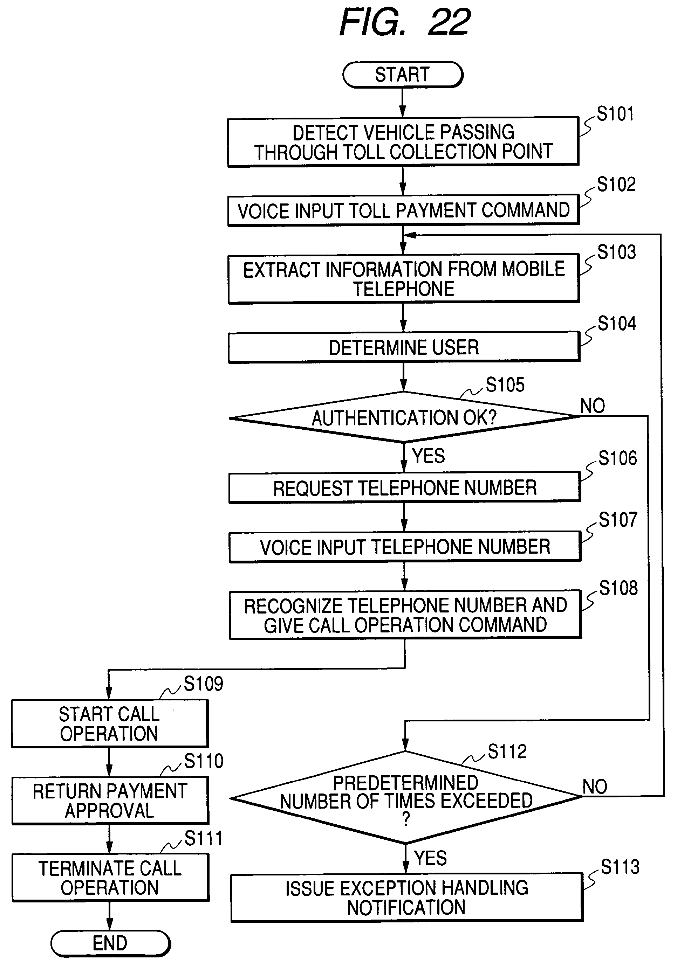

FIG. 22 shows a processing flow in the mobile telephone 5 and the hand-free unit 4 when the example is applied to the system of the second embodiment. Steps S101, S102, and S106 to S111 in FIG. 22 are similar to steps S41, S42, and S46 to S51 previously described with reference to FIG. 15 in the second embodiment and therefore will not be discussed again. Steps S103 to S105, S112, and S113 are similar to steps S83 to S85, S92, and S93 in FIG. 21 and therefore will not be discussed again.

According to the described configuration, the user can be authenticated simply by attaching the mobile telephone 5 carried with the user to the hand-free unit 4. Therefore, the step of entering the personal identification number, etc., can be skipped and the system can be made convenient for the user.

The user identification system using the mobile telephone 5 and the user identification system based on the personal identification number described above may be used together and the usermaybe able to select either of the user identification systems. For example, the following application is possible:
Basically, the system using the mobile telephone 5 is set and if the user drives the automobile intentionally without carrying the mobile telephone 5, the basic system is switched to the system based on the personal identification number.

The two-step authentication system is described above. It can also be applied to the user identification system using the mobile telephone 5. Specifically, when the mobile telephone 5 is connected to the center system 2 at S89 or S109 in the flowchart of FIG. 21 or FIG. 22, the center system 2 again requests the mobile telephone 5 to transmit the proper information. That is, the center system 2 has a database storing the correspondence between the users and the proper information and also authenticates the user by referencing the database. As authentication processing is thus performed in two steps in the hand-free unit 4 and the center system 2, it is made possible to ever more enhance security.

It is to be understood that the invention is not limited to the specific embodiments thereof except as defined in the claims and that embodiments provided by using the technical means disclosed in the different embodiments in appropriate combination are also contained in the scope of the invention.

As described above, the vehicle-installed terminal according to the invention, which is installed in an automobile, includes the communication terminal control means for performing communication control of a communication terminal for conducting communications using a mobile telephone network and the control means for controlling the operation of the vehicle-installed terminal, wherein the control means includes the authentication processing means for authenticating the user and the payment communication processing means for causing the communication terminal control means to cause the communication terminal to conduct communications with an external payment management system and performing payment processing with the payment management system if the authentication processing means authenticates the user.

The communication payment method of a vehicle-installed terminal according to the invention is a communication payment method of a vehicle-installed terminal installed in an automobile and includes the steps of authenticating the user and causing a communication terminal for conducting communications using a mobile telephone network to conduct communications with an external payment management system and performing payment processing with the payment management system if the user is authenticated.

Accordingly, the vehicle-installed terminal (communication payment method of vehicle-installed terminal) provides the advantage that it is made possible to make a payment with amore inexpensive vehicle-installed terminalfor providing a communication function as a communication terminal without using an ETC-dedicated vehicle-installed terminal having a communication terminal as in the ETC, for example.

Therefore, payment processing cannot be performed with any other person than the user whose identification is authenticated and thus, for example, if a vehicle is stolen, payment processing cannot be performed with a third person and security can be provided.

The vehicle-installed terminal provides the advantages that the authentication processing can be performed rapidly and that the communication cost for authentication can also be saved.

Communications for making a payment use themobile telephone network, so that the need for providing a radio system as in the ETC can be eliminated.

The vehicle-installed terminal according to the invention may further include storage means used by the control means, wherein the authentication processing means may perform authentication processing by collating the personal identification number previously stored in the storage means with the personal identification number entered by the user.

Accordingly, a comparatively simple configuration can be adoptedas the configuration for the authentication processing, so that the system cost can be decreased in addition to the above-described advantages.

The vehicle-installed terminal according to the invention may further include voice input means for inputting voice of the user and voice recognition means for conducting voice recognition based on a voice signal input by the voice input means, wherein the personal identification number may be entered by voice of the user.

Accordingly, the vehicle-installed terminal provides the advantage that, for example, if the user is driving an automobile, it is made possible to perform payment processing without any trouble in the driving in addition to the above-described advantages.

Such a hand-free unit is an indispensable unit for the user who wants to hold a conversation through a mobile telephone during driving an automobile and therefore the user is to easily purchase such a vehicle-installed terminal.

The vehicle-installed terminal according to the invention may further include storage means used by the control means, wherein the storage means may store proper information for enabling the individual of the communication terminal to be determined as the user database, and wherein the authentication processing means may perform authentication processing by collating the proper information stored in the user database in the storage means with proper information extracted from the communication terminal.

Accordingly, the user can be authenticated simply by connecting the communication terminal to the vehicle-installed terminal. Therefore, it is made possible to drastically decrease the labor of the user in addition to the above-described advantages.

In the vehicle-installed terminal according to the invention, the control means may further include vehicle body information communication processing means for transmitting information concerning the automobile to the external payment management system.

Accordingly, the vehicle-installed terminal provides the advantage that it is made possible to perform payment processing and toll calculationprocessing inmore detail andmore precisely in the payment management system in addition to the above-described advantages.

In the vehicle-installed terminal according to the invention, the payment communication processing means may transmit the personal identification number for payment entered by the user to the payment management system.

Accordingly, the authentication processing is performed in two steps, so that the security can be furthermore enhanced in addition to the above-described advantages.

In the vehicle-installed terminal according to the invention, the payment communication processing means may transmit proper information extracted from the communication terminal to the payment management system.

Accordingly, the authentication processing is performed in two steps, so that the security can be furthermore enhanced in addition to the above-described advantages.

The vehicle-installed terminal according to the invention may further include position information acquisition means for acquiring the current position information of the automobile, wherein the control means may further include position recognition processing means for causing the payment communication processing means to start payment processing when the current position information becomes a predetermined position.

Accordingly, in addition to the above-described advantages, it is made possible to suitably use the vehicle-installed terminal with a road pricing system for charging when the vehicle enters a specific region. For example, a unit for conducting radio communications with the vehicle-installed terminal need not be provided on the road and the vehicle-installed terminal need not be provided with a unit for conducting radio communications with the unit on the road, so that an increase in the cost to introduce the road pricing systemcanbe suppressed.

The payment management system according to the invention is a payment management system for conducting communications with the vehicle-installed terminal according to the invention and performing payment processing for the user of the vehicle-installed terminal. The payment management system includes the user identification means for identifying the user of the vehicle-installed terminal based on information sent from the vehicle-installed terminal; the toll recognition means for recognizing a toll to charge the user based on information sent from the vehicle-installed terminal; and the payment processing means for performing payment processing of the toll recognized by the toll recognition means for the user.

The payment management method according to the invention is a payment management method in the payment management system for conducting communications with the vehicle-installed terminal according to the invention and performing payment processing for the user of the vehicle-installed terminal. The payment management method includes the steps of identifying the user of the vehicle-installed terminal based on information sent from the vehicle-installed terminal; recognizing a toll to charge the user based on information sent from the vehicle-installed terminal; and performing payment processing of the toll recognized in the step.

Accordingly, the user is identified and the toll is recognized based on the information sent from the vehicle-installed terminal, and the payment processing is performed based on the result. Therefore, the payment processing can be performed precisely.

In the payment management system according to the invention, the user identification means may recognize the correspondence between information sent from a toll collection system for providing service for the user of the vehicle-installed terminal and collecting the toll of the service and information sent from the vehicle-installed terminal, and the toll recognition means may calculate the toll for the user based on information sent from the toll collection system.

Accordingly, in addition to the above-described advantage, it is made possible to perform the payment processing precisely without conducting communications concerning charging between the vehicle-installed terminal and the toll collection system. That is, in the vehicle-installed terminal and the toll collection system, the components for conducting communications therebetween become unnecessary, so that it is made possible to decrease the costs of the vehicle-installed terminal and the toll collection system.

The toll collection system according to the invention is a toll collection system for providing service for the user of the vehicle-installed terminal according to the invention and collecting the toll of the service. The toll collection system includes the vehicle body identification means for recognizing vehicle body identification information for identifying the automobile in which the vehicle-installed terminal is installed, and the vehicle body identification information transmission means for transmitting the vehicle body identification information to an external payment management system.

The toll collection method according to the invention is a toll collection method in the toll collection system for providing service for the user of the vehicle-installed terminal according to the invention and collecting the toll of the service. The toll collection method includes the steps of recognizing vehicle body identification information for identifying the automobile inwhich the vehicle-installed terminal is installed, and transmitting the vehicle body identification information to an external payment management system.

Accordingly, radio communications, etc., need not be conducted between the toll collection system and the vehicle-installed terminal, so that it is made possible to decrease the costs of the toll collection system and the vehicle-installed terminal.

In the toll collection system according to the invention, the vehicle body identification means may further perform processing of determining the vehicle type of the automobile, and the vehicle body identification information transmission means may also transmit the vehicle type determination information to the payment management system.

Accordingly, it is made possible to calculate a toll in the payment management system more meticulously in addition to the above-described advantages.

The toll collection system according to the invention may further include passage permission means for permitting passage of the automobile upon reception of a message indicating that the user of the automobile to collect the toll completes a payment normally.

Accordingly, in addition to the above-described advantages, the fact that the user of the automobile to collect the toll completes a payment normally is checked based on the message from the payment management system before passage of the automobile is permitted. Thus, the toll can be collected more precisely.

The toll collection system according to the invention is a toll collection system for providing service for the user of the vehicle-installed terminal according to the invention and collecting the toll of the service. The toll collection system includes the vehicle body identification means for recognizing vehicle body identification information for identifying the automobile in which the vehicle-installed terminal is installed; the storage means for storing the vehicle body identification information recognized by the vehicle body identification means; and the payment completion recognition means for erasing the vehicle body identification information stored in the storage means upon reception of the vehicle body identification information concerning the automobile of the user completing a payment normally from payment management system and recognizing that the user corresponding to the vehicle body identification information does not make a payment if the predetermined time has elapsed since the vehicle body identification information was stored in the storage means.

The toll collection method according to the invention is a toll collection method in a toll collection system for providing service for the user of the vehicle-installed terminal according to the invention and collecting the toll of the service. The toll collection method includes the steps of recognizing vehicle body identification information for identifying the automobile in which the vehicle-installed terminal is installed;
storing the vehicle body identification information; and erasing the stored vehicle body identification information upon reception of the vehicle body identification information concerning the automobile of the user completing a payment normally from payment management system and recognizing that the user corresponding to the vehicle body identification information does not make a payment if the predetermined time has elapsed since the vehicle body identification information was stored.

Accordingly, it is made possible to identify the automobile completing the payment without conducting radio communications, etc., between the toll collection system and the vehicle-installed terminal.

## Claims

1. A vehicle-installed terminal installed in an automobile, comprising:
communication terminal control means for performing communication control of a communication terminal for conducting communications using a mobile telephone network; and
control means for controlling the operation of said vehicle-installed terminal, **characterized in that**
said control means comprises:
authentication processing means for authenticating a user; and
payment communication processing means for causing said communication terminal control means to cause the communication terminal to conduct communications with an external payment management system and performing payment processing with the payment management system if the authentication processing means authenticates the user.

2. The vehicle-installed terminal as claimed in claim 1 further comprising storage means used by said control means, wherein
the authentication processing means performs authentication processing by collating a personal identification number previously stored in the storage means with a personal identification number entered by the user.

3. The vehicle-installed terminal as claimed in claim 2 further comprising:
voice input means for inputting voice of the user; and
voice recognition means for conducting voice recognition based on a voice signal input by the voice input means, wherein
the personal identification number is entered by voice of the user.

4. The vehicle-installed terminal as claimed in claim 1 further comprising storage means used by said control means, wherein
the storage means stores proper information for enabling the individual of the communication terminal to be determined as a user database, and wherein
the authentication processing means performs authentication processing by collating the proper information stored in the user database in the storage means with proper information extracted from the communication terminal.

5. The vehicle-installed terminal as claimed in any one of claims 1 to 4 wherein said control means further comprises vehicle body information communication processing means for transmitting information concerning the automobile to the external payment management system.

6. The vehicle-installed terminal as claimed in any one of claims 1 to 4 wherein the payment communication processing means transmits a personal identification number for payment entered by the user to the payment management system.

7. The vehicle-installed terminal as claimed in any one of claims 1 to 4 wherein the payment communication processing means transmits proper information extracted from the communication terminal to the payment management system.

8. The vehicle-installed terminal as claimed in any one of claims 1 to 4 further comprising position information acquisition means for acquiring current position information of the automobile, wherein
said control means further comprises position recognition processing means for causing the payment communication processing means to start payment processing when the current position information becomes a predetermined position.

9. A communication payment method of a vehicle-installed terminal installed in an automobile, comprising the steps of:
authenticating a user; and
causing a communication terminal for conducting communications using a mobile telephone network to conduct communications with an external payment management system and performing payment processing with the payment management system if the user is authenticated.

10. A payment management system for conducting communications with the vehicle-installed terminal as claimed in any one of claims 1 to 4 and performing payment processing for a user of the vehicle-installed terminal, said payment management system comprising:
user identification means for identifying the user of the vehicle-installed terminal based on information sent from the vehicle-installed terminal;
toll recognition means for recognizing a toll to charge the user based on information sent from the vehicle-installed terminal; and
payment processing means for performing payment processing of the toll recognized by said toll recognition means for the user.

11. The payment management system as claimed in claim 10 wherein said user identification means recognizes the correspondence between information sent from a toll collection system for providing service for the user of the vehicle-installedterminalandcollectingthetolloftheservice and information sent from the vehicle-installed terminal, and wherein
said toll recognition means calculates the toll for the user based on information sent from the toll collection system.

12. A payment management method in a payment management system for conducting communications with the vehicle-installed terminal as claimed in any one of claims 1 to 4 and performing payment processing for a user of the vehicle-installed terminal, said payment management method comprising the steps of:
identifying the user of the vehicle-installed terminal based on information sent from the vehicle-installed terminal;
recognizing a toll to charge the user based on information sent from the vehicle-installed terminal; and
performing payment processing of the toll recognized in said step.

13. A toll collection system for providing service for a user of the vehicle-installed terminal as claimed in any one of claims 1 to 4 and collecting the toll of the service, said toll collection system comprising:
vehicle body identification means for recognizing vehicle body identification information for identifying the automobile in which the vehicle-installed terminal is installed; and
vehicle body identification information transmission means for transmitting the vehicle body identification information to an external payment management system.

14. The toll collection system as claimed in claim 13 wherein said vehicle body identification means further performs processing of determining the vehicle type of the automobile, and wherein
said vehicle body identification information transmission means also transmits the vehicle type determination information to the payment management system.

15. The toll collection system as claimed in claim 13 or 14 further comprising passage permission means for permitting passage of the automobile upon reception of a message indicating that the user of the automobile to collect the toll completes a payment normally.

16. A toll collection system for providing service for a user of the vehicle-installed terminal as claimed in any one of claims 1 to 4 and collecting the toll of the service, said toll collection system comprising:
vehicle body identification means for recognizing vehicle body identification information for identifying the automobile in which the vehicle-installed terminal is installed;
storage means for storing the vehicle body identification information recognized by said vehicle body identification means; and
payment completion recognition means for erasing the vehicle body identification information stored in said storage means upon reception of the vehicle body identification information concerning the automobile of the user completing a payment normally frompayment management system and recognizing that the user corresponding to the vehicle body identification information does not make a payment if the predetermined time has elapsed since the vehicle body identification information was stored in said storage means.

17. A toll collection method in a toll collection system for providing service for a user of the vehicle-installed terminal as claimed in any one of claims 1 to 4 and collecting the toll of the service, said toll collection method comprising the steps of:
recognizing vehicle body identification information for identifying the automobile in which the vehicle-installed terminal is installed; and
transmitting the vehicle body identification information to an external payment management system.

18. A toll collection method in a toll collection system for providing service for a user of the vehicle-installed terminal as claimed in any one of claims 1 to 4 and collecting the toll of the service, said toll collection method comprising the steps of:
recognizing vehicle body identification information for identifying the automobile in which the vehicle-installed terminal is installed;
storing the vehicle body identification information; and
erasing the stored vehicle body identification information upon reception of the vehicle body identification information concerning the automobile of the user completing a payment normally from payment management system and recognizing that the user corresponding to the vehicle body identification information does not make a payment if the predetermined time has elapsed since the vehicle body identification information was stored.
